# EUROPÄISCHE PATENTSCHRIFT

(11) **EP 2 031 566 B1**
(45) Veröffentlichungstag und Bekanntmachung des Hinweises auf die Patenterteilung: **02.07.2014**
(21) Anmeldenummer: 07017204.4
(22) Anmeldetag: 03.09.2007
(51) Int. Cl.: B60R 25/20, G07C 9/00

(54) **Verfahren zum Betrieb eines Systems mit wenigstens einem elektronischen Schloss**
Method for operating a system with at least one electronic lock
Procédé destiné au fonctionnement d'un système doté d'au moins une serrure électronique

(43) Veröffentlichungstag der Anmeldung: 04.03.2009
(73) Patentinhaber: BURG-WÄCHTER KG, 58540 Meinerzhagen -Valbert (DE)
(72) Erfinder: Lüling Harald, 58540 Meinerzhagen (DE)
(74) Vertreter: Stenger, Watzke & Ring

(56) Entgegenhaltungen:
- EP-A- 0 787 875
- WO-A-98/27441
- DE-A1- 10 202 282
- DE-A1- 10 211 930
- DE-A1- 10 250 696
- DE-A1- 10 303 960
- DE-A1- 19 957 536

## Beschreibung

Die vorliegende Erfindung betrifft ein Verfahren zum Betrieb eines Systems mit wenigstens einem elektronischen Schloss, insbesondere ein Türschloss. Darüber hinaus betrifft die Erfindung ein Schloss sowie einen Schlüssel zum Betrieb gemäß dem erfindungsgemäßen Verfahren. Ferner betrifft die Erfindung ein Verfahren zum Programmieren eines Schlosses einer wenigstens zwei Schlösser aufweisenden Schließanlage.

Im Stand der Technik sind Schlösser bekannt, die sich mit sogenannten Funkschlüsseln betätigen lassen. Diese Schlösser weisen eine Sende-Empfangseinheit auf, die auf Anforderung durch ein Schlüsselsignal, welches vom Schlüssel ausgesendet wird, mit diesem in Kommunikationsverbindung treten und eine Berechtigung für einen Zugang beziehungsweise einen Zugriff prüfen. Dazu übermittelt der Schlüssel ein entsprechendes Datensignal. Oftmals wird dieses Datensignal durch manuelle Betätigung einer Taste des Schlüssels ausgelöst. Wird schlossseitig die Berechtigung als gültig festgestellt, wird eine Verriegelungseinheit betätigt, die es dem Schlüsselinhaber erlaubt, Zutritt beziehungsweise Zugriff zu erlangen. Dies kann beispielsweise dadurch geschehen, dass eine Tür oder ein Tor geöffnet wird oder auch eine verschiebbare Verschlusseinheit, beispielsweise eine Schiebetür oder ein Schiebefenster, zur Betätigung freigegeben wird. Verbreitung haben solche Systeme mittlerweile insbesondere im Kfz-Bereich gefunden, wobei mittels Funkschlüsseln die Türschlösser eines Autos betätigt werden können. Die Begriffe Schloss und Schlüssel sollen nicht nur die umgangssprachlich zugewiesenen Einheiten umfassen, sondern darüber hinaus auch im wesentlichen mobile und/oder ortsfeste Einheiten. So kann der Schlüssel beispielsweise auch als Funktastenfeld an einer Zarge der Tür oder daneben ortsfest angeordnet sein. Ein Zugangssuchender muss seine Identifikation eingeben, woraufhin das Funktastenfeld mit dem Schloss im Kommunikationsverbindung tritt. Die Identifikation kann natürlich auch biometrische Daten umfassen, beispielsweise Fingerabdrücke, Irisscan oder dergleichen. Ein Schloss in einer Haustür soll beispielsweise im wesentlichen ortsfest sein, wohingegen ein Schloss eines Kraftfahrzeugs im wesentlichen mobil ist. Ein Schloss ist grundsätzlich jede Einheit, die auf Anforderung bei Vorliegen einer gültigen Berechtigung, nämlich eines Schlüssels, einen Zutritt beziehungsweise Zugriff erlaubt. Ferner kann die vorliegende Erfindung auch mit mechanischen Schlüsseln und Schlössern kombiniert sein.

Aber auch bei Zugangskontrollsystemen für Bereiche, zu denen nur berechtigtes Personal Zutritt hat oder auch zu Schränken, Wertpapierspeichern oder dergleichen, setzt sich ebenfalls immer mehr die Verwendung derartiger elektronischer Schließsysteme durch. Hierdurch soll nicht nur ein erhöhtes Sicherheitsbedürfnis befriedigt werden, sondern es besteht darüber hinaus der Wunsch danach, berechtigten Personen einen möglichst einfachen Zutritt zu gewähren. Gerade wenn eine Vielzahl von Schlüsseln in einem Gebäude erforderlich ist, um zu den unterschiedlichen Bereichen mit unterschiedlicher Berechtigung Zutritt zu gewähren, erweist es sich einerseits als nachteilig, dass üblicherweise die Einrichtung eines einheitlichen Schließsystems erforderlich ist und darüber hinaus die Nutzer eine entsprechende Anzahl von Schlüsseln mitführen müssen.

Darüber hinaus besteht der Wunsch, auch im Bereich der Privathaushalte eine Vereinfachung bezüglich der Schließsysteme zu erreichen. Einerseits soll eine Möglichkeit geschaffen werden, bei einem Verlieren eines Schlüssels nicht die gesamte Schließanlage erneuern zu müssen, um Missbrauch mit dem verlorenen Schlüssel zu vermeiden, sondern es besteht darüber hinaus der Wunsch, die mechanische Betätigungsarbeit zu erleichtern oder sogar einzusparen, um den Zugang zu erleichtern. Dies ist insbesondere dann vorteilhaft, wenn eine für die manuelle Betätigung des Türschlosses erforderliche Hand einer Person nicht zur Verfügung steht, weil sie beispielsweise für das Tragen von Gegenständen benötigt wird.

So beschreibt beispielsweise die DE 197 38 938 A1 ein Schließsystem mit einem elektronischen Schloss, welches für den Einsatz für Türen vorgesehen ist. Das Schloss kann mit einem Transponderschlüssel betätigt werden, wobei der Transponderschlüssel einen Identitätscode an das Schloss übermittelt, der durch das Schloss geprüft wird, wobei bei einem gültigen Identifikationscode der Zugang gewährt wird.

Die zunehmende Anwendung derartiger Systeme führt zu dem Problem, dass bei Vorhandensein mehrerer Funkschlüssel ein Auswahlproblem bezüglich der Zugangsanforderungen entsteht. Dies kommt einerseits dann vor, wenn mehrere Personen mit jeweils einem Funkschlüssel Zugang zu einem mit einem Funkschloss gesicherten Raum wünschen und andererseits, wenn das Funksignal eines Schlüssels mehrere, in Reichweite befindliche Schlösser parallel anspricht. Dies kann einerseits dazu führen, dass die Steuerung des Schlosses in einen Gestörtzustand übergeht und der Zutritt generell verweigert wird. Im anderen Fall könnte das Problem auftreten, dass zu mehreren Räumen der Zutritt durch die entsprechenden Funkschlösser freigegeben wird, obwohl dies nur für einen Raum gewünscht war. Im ersten Fall entsteht ein Problem hinsichtlich der Nutzbarkeit und im zweiten Fall könnte ein Sicherheitsproblem die Folge sein, weil unberechtigte Dritte Zugang zu Räumen erhalten können, zu denen gar kein Zugang gewünscht war.

Aus dem Stand der Technik ist die DE 102 02 282 A1 bekannt, die sich mit einem Verfahrensbetrieb eines elektronisches Schlosses sowie eines elektronischen Schlüssels befasst. Das Verfahren sieht vor, dass ein Schloss ein Signal mit einer Maskierungsinformation aussendet, welches von Schlüsseln, die, um potentiell als Kommunikationspartner in Frage kommen zu können, am Schloss angemeldet sein müssen, empfangen wird. Die Schlüssel ermitteln aus dem Empfangssignal die Maskierungsinformation und berechnen daraus ein für den jeweiligen Schlüssel festvorgebenes Zeitfenster zum Senden eines Antwortsignals. Sobald das jeweilige Zeitfenster im Zeitablauf erreicht ist, wird das Antwortsignal vom Schlüssel an das Schloss gesendet. Darüber hinaus werden Schlüssel-Schloss-Kombinationen in einer festvorgegebenen Abfolge der Berechtigungsprüfung unterzogen.

Die EP 0 276 113 A2 zeigt ein Transpondersystem zur Signalpegel abhängigen zeitfensterung von Antwortsignalen.

Der vorliegenden Erfindung liegt deshalb die **Aufgabe** zugrunde, ein gattungsgemäßes Verfahren dahingehend weiterzubilden, dass es die vorgenannten Nachteile überwindet, sowie ein Schloss und einen Schlüssel zur Anwendung eines solchen Verfahrens anzugeben.

Die Aufgabe wird mittel der unabhängigen Ansprüche 1, 27 und 30 gelöst.

Es wird dazu ein Verfahren zum Betrieb eines Systems mit wenigstens einem elektronischen Schloss und wenigstens einem elektronischen Schlüssel vorgeschlagen, wobei ein Verriegelungsmechanismus des Schlosses mittels einer Steuereinheit des Schlosses gesteuert wird, wobei zwischen der Steuereinheit und dem elektronischen Schlüssel mittels Sende- und Empfangsmitteln eine drahtlose Kommunikationsverbindung hergestellt wird, wobei vom Schloss zum Schlüssel und/oder vom Schlüssel zum Schloss ein Aufforderungssignal gesendet wird, wobei ein Parameter aus dem Aufforderungssignal empfangsseitig zur Ermittlung einer Verzögerung des Aussendens eines Antwortsignals genutzt wird, indem die Verzögerung des Aussendens des Antwortsignals aus einem Empfangssignalpegel, einer Empfangssignalpegeländerung und/oder einer Empfangsgüte des Aufforderungssignals ermittelt wird, und das Antwortsignal gemäß der ermittelten Verzögerung ausgesendet wird.

Je nach Betriebsart ist vorgesehen dass entweder der Schlüssel oder auch das Schloss das Aufforderungssignal aussendet. Dieses kann beispielsweise ein Wake-Up-Signal oder dergleichen sein. Das Aufforderungssignal fordert die Empfänger dieses Signals auf, in vorgebbarer Weise ein Antwortsignal auszusenden. Vorliegend wird mit dem Aufforderungssignal die entsprechende Gegenstelle, beispielsweise der Schlüssel oder das Schloss, aufgefordert, ein Antwortsignal zu senden. Damit vermieden werden kann, dass die Gegenstellen ihr Antwortsignal gleichzeitig aussenden und es damit zu einer gegenseitigen Störung kommen kann, werden die Antwortsignale unterschiedlich zeitlich verzögert ausgesendet. Dies wird gemäß der Erfindung dadurch erreicht, dass aus dem Aufforderungssignal ein Parameter gewonnen wird, unter dessen Berücksichtigung die zeitliche Verzögerung des Aussendens des Antwortsignals jeweils individuell ermittelt werden kann. Der Parameter kann beispielsweise durch physikalische Eigenschaften des Aufforderungssignals am jeweiligen Empfangsort gebildet sein, wobei beispielsweise wenigstens eine physikalische Größe der Ermittlung der Verzögerung des Aussendens des Antwortsignals zugrundeliegt. Natürlich kann auch vorgesehen sein, dass das Aufforderungssignal eine Information enthält, die empfangsseitig zur Ermittlung der Verzögerung verwendet werden kann. So kann beispielsweise vorgesehen sein, dass über das Aufforderungssignal für jede Empfangsstelle eine Zeitangabe oder eine Information, aus der die Zeitangabe ermittelt werden kann, festgestellt wird, die es ermöglicht, empfangsseitig die Verzögerung zu ermitteln. Natürlich können auch Parameter wie Sendefrequenz, Sendefrequenzänderung oder dergleichen ausgewertet werden, um beispielsweise nach einem vorgebbaren Algorithmus eine Verzögerung zu ermitteln.

Besonders vorteilhaft erweist es sich, wenn das Vorliegen einer Zugangs- und/oder Zugriffsberechtigung für eine Schlüssel-Schloss-Kombination primär für den Schlüssel und/oder das Schloss mit der kürzesten Verzögerung ermittelt wird. Auf diese Weise kann erreicht werden, dass eine besonders relevante Schlüssel-Schloss-Kombination bevorzugt für die Bestimmung einer Zugangs- und/oder Zugriffsberechtigung ausgewählt wird. Dies kann beispielsweise dadurch gegeben sein, dass der Schlüssel und das Schloss in möglichst kurzer Entfernung zueinander stehen. Erweist sich beispielsweise die ausgewählte Schlüssel-Schloss-Kombination nicht als mit einer erforderlichen Zugangs- und/oder Zugriffsberechtigung versehen, so kann die Schlüssel-Schloss-Kombination mit der nächstkürzesten Verzögerung ausgewählt und geprüft werden. Auf diese Weise lässt sich ein Kommunikationskonflikt zwischen Schlössern und/oder Schlüsseln auflösen.

Es wird vorgeschlagen, dass die Verzögerung des Aussendens des Antwortsignals aus einem Empfangssignalpegel, einer Empfangssignalpegeländerung und/oder einer Empfangsgüte des Aufforderungssignals ermittelt wird. Der Empfangssignalpegel kann beispielsweise mit einem absoluten Pegel oder auch bezogen auf einen Referenzpegel ermittelt werden. Darüber hinaus kann auch eine Empfangssignalpegeländerung zugrundegelegt oder berücksichtigt werden, um die Verzögerung zu ermitteln. Weitere Kriterien können durch eine Empfangsgüte des Aufforderungssignals gegeben sein, die sich beispielsweise in Form eines Signal-Stör-Abstands, einer Signalqualität oder dergleichen ausprägen kann. Die Signalpegel können durch Feldstärken gebildet sein. Natürlich können die Empfangsfeldstärke, die Empfangsfeldstärkeänderung sowie die Empfangsgüte auch teilweise gemeinsam, gegebenenfalls mit unterschiedlichen Gewichtsfaktoren, für die Ermittlung der Verzögerung berücksichtigt werden. Auf diese Weise kann eine hochflexible und gut adaptierbare Anwendung des Verfahrens erreicht werden.

Ferner wird eine wertediskrete Verzögerung des Aussendens des Antwortsignals verwendet. Die ermittelte Verzögerung wird somit diskretisiert, so dass feste Zeitfenster für das Aussenden des Antwortsignals realisiert werden können. Vorzugsweise sind die Zeitfenster derart gewählt, dass sich mehrere Antwortsignale zeitlich nicht überlappen. Dies kann beispielsweise dadurch erreicht werden, dass die Antwortsignale eine vorgebbare zeitliche Länge aufweisen, also einem vorgebbaren Protokoll entsprechen und die diskreten Verzögerungszeiten bezüglich ihrer Zeitfenster an das entsprechende Antwortsignal angepasst sind. Auf diese Weise kann eine vollständige Entkopplung der Antwortsignale auf zeitlicher Basis erreicht werden. Dies ermöglicht es, empfangsseitig bezogen auf die Antwortsignale alle Antwortsignale vollständig zu empfangen und separat nacheinander bezüglich einer Zugangs- und/oder Zugriffsberechtigung abzuarbeiten. Ist beispielsweise die zuerst ausgewählte Schlüssel-Schloss-Kombination nicht berechtigt, kann unverzüglich die zweite Schlüssel-Schloss-Kombination in vorgebbarer Weise abgearbeitet werden. Ergibt sich hierbei eine Berechtigung, kann der Zugang beziehungsweise der Zugriff freigegeben werden. Eine erneute Aussendung eines Aufforderungssignals ist dann nicht mehr erforderlich, um weitere Schlüssel-Schloss-Kombinationen prüfen zu können.

Zu dem wird vorgeschlagen, dass die Verzögerung des Aussendens des Antwortsignals nichtlinear zugeordnet wird. Dies erweist sich insbesondere dann als vorteilhaft, wenn eine hohe Auflösung beispielsweise in einem Nahbereich im Unterschied zu einem Fernbereich erwünscht ist. So kann vorgesehen sein, dass im Bereich großer Empfangsfeldstärken beziehungsweise Empfangsfeldstärkenänderungen eine sehr große Auflösung mit vielen diskreten Verzögerungswerten vorgesehen ist, wohingegen bei kleinen Empfangsfeldstärken beziehungsweise Empfangsfeldstärkenänderungen nur eine geringe Anzahl von diskreten Verzögerungen vorgesehen ist. Dies kommt einer Situation entgegen, wenn beispielsweise mehrere Schlösser eng beieinander angeordnet sind, und mit einem Schlüssel kommunizieren oder wenn ein Schloss beispielsweise mit mehreren in seiner Nähe befindlichen Schlüsseln kommuniziert. Die nicht lineare Zuordnung kann beispielsweise auch an weitere Randbedingungen angepasst sein, wobei auch Störpegel oder Störsignale sowie Empfangseigenschaften eines Diskriminators oder dergleichen berücksichtigt werden können.

Es wird mit der vorliegenden Erfindung ein Verfahren vorgeschlagen, welches es ermöglicht, Zugriffskonflikte, insbesondere auch bezüglich der Kommunikationsverbindungen, zu beheben. Die Kommunikationsverbindung wird mit dem Schlüssel hergestellt, der schlossseitig mit dem größten Empfangssignalpegel und/oder der größten Empfangssignalpegeländerung empfangen wird. Hierdurch kann gewährleistet werden, dass beispielsweise die Kommunikationsverbindung mit dem am nächsten liegenden Schlüssel unter Berücksichtigung einer möglicherweise gerichteten drahtlosen Kommunikationsverbindung hergestellt wird. Der Empfangssignalpegel kann nicht nur ein absoluter Empfangssignalpegel sein, sondern er kann auch ein Pegelabstand des Empfangssignalpegels zu einem Störpegel oder dergleichen sein. Der Empfangssignalpegel kann für ein schmales oder auch für ein breites Frequenzband ermittelt werden. Bei der Festlegung der Bandbreite für die Ermittlung des Empfangssignalpegels können vorzugsweise Eigenschaften der Modulations- und/oder Codierungsart berücksichtigt werden. Die Verwendung des relativen Empfangssignalpegels ermöglicht die Berücksichtigung von aktuellen und/oder permanenten Störsignalen beziehungsweise Hintergrundsignalen. Die Störsicherheit und demzufolge auch die Zuverlässigkeit kann verbessert werden. Daneben kann aber auch eine Empfangssignalpegeländerung ausgewertet werden, um beispielsweise die größte Zunahme als Bewegung auf das Schloss zu zu werten und mit diesem Schlüssel in Kommunikationsverbindung zu treten. Die beiden Entscheidungskriterien können natürlich auch miteinander kombiniert werden, wobei beispielsweise dem größten Empfangssignalpegel vor der größten Empfangssignalpegeländerung Vorzug eingeräumt werden kann, weil möglicherweise die Zugang begehrende Person schon vor der Tür mit dem Schloss steht und wartet, wohingegen eine weitere Person noch in größerer Entfernung befindlich ist und sich mit ihrem Schlüssel auf das Schloss zubewegt. Die Steuereinheit weist Sende- und Empfangsmittel in herkömmlicher Form auf, um die drahtlose Kommunikationsverbindung aufzubauen. Natürlich können auch der Empfangssignalpegel und dessen Änderung zu einer neuen Größe verknüpft werden, beispielsweise durch Bilden einer relativen Änderung, um eine neue Entscheidungsgröße zu bilden. Die Kommunikationsverbindung kann beispielsweise über Funk, Ultraschall, Infrarot oder dergleichen hergestellt werden. Die Sende- und Empfangsmittel sind entsprechend angepasst. Ermittelt das Schloss beispielsweise mehr als einen Schlüssel bezüglich des größten Empfangssignalpegels beziehungsweise Empfangssignalpegeländerung, kann vorgesehen sein, dass der Schlüssel mit dem Schloss in Kommunikationsverbindung tritt, der zuerst eine vollständige Information liefert. Daneben kann vorgesehen sein, dass grundsätzlich das Schloss mit diesem Schlüssel in Kommunikationsverbindung tritt, und zwar unabhängig vom Empfangssignalpegel beziehungsweise dessen Änderung. Ferner kann vorgesehen sein, dass ein Schlüssel ein Vorrangsignal liefert, woraufhin das Schloss mit diesem Schlüssel in Kommunikationsverbindung tritt, unabhängig vom Empfangssignalpegel beziehungsweise dessen Änderung.

Die Steuereinheit ist in der Lage, unter Berücksichtigung der empfangenen Informationen eines ausgewählten Schlüssels dessen Berechtigung zu prüfen und bei gültiger Zugangs- und/oder Zugriffsberechtigung den Zugang und/oder den Zugriff zu gewähren. Hierzu steht die Steuereinheit mit einem durch die Steuereinheit steuerbaren Verriegelungsmechanismus in Kommunikationsverbindung, der die Betätigung beispielsweise einer Türfalle oder dergleichen mittels eines Betätigungselements wie einer Türklinke, einem Drehknauf oder dergleichen erlaubt. Es kann auch vorgesehen sein, dass mittels der Steuerung eine Öffnung am Schloss zum Einführen eines Schlüsselbartes freigegeben wird. Auf diese Weise kann eine Kombination von elektronischen und mechanischen Sicherheitsmerkmalen erreicht werden.

Der Verriegelungsmechanismus kann derart ausgebildet sein, dass er eine Ruhestellung aufweist, in der das Betätigungsmittel nicht mit der Türfalle gekoppelt ist. Erst auf ein Signal der Steuereinheit hin stellt der Verriegelungsmechanismus die Kopplung her, so dass die Falle mittels des Betätigungselements betätigt werden kann. Der Verriegelungsmechanismus kann dergestalt ausgebildet sein, dass im gestörten Fall die Kopplung außer Eingriff ist, um einen unberechtigten Zutritt zu vermeiden.

Sind mehrere Schlösser in Kommunikationsreichweite des Schlüssels, für die der Empfangspegel des Schlüssels der größte ist, wird vorgeschlagen, dass der Schlüssel mit dem Schloss in Kommunikationsverbindung tritt, für das durch den Schlüssel der größte Empfangspegel und/oder die größte Empfangspegeländerung ermittelt wird. Auf diese Weise kann ein Kommunikationskonflikt eines Schlüssels mit mehreren Schlössern aufgelöst werden. Die Ermittlung des Empfangspegels eines Schlosssignals im Schlüssel kann kostengünstig unter weitgehender Verwendung ohnehin für den bestimmungsgemäßen Betrieb des Schlüssels erforderlichen Baueinheiten verwirklicht werden.

In einer Weiterbildung wird vorgeschlagen, dass die Empfangssignalpegel und/oder die Empfangssignalpegeländerungen ermittelt werden. Hierdurch wird eine Vergleichbarkeit der einzelnen empfangenen Pegel geschaffen. Die Pegel können diskretisiert und zur weiteren Erfassung nach Größe des Pegels und/oder der Pegeländerung klassifiziert werden. Die Klassifizierung kann beispielsweise darin bestehen, dass bestimmte Pegelbereiche einen gemeinsamen Wert für die weitere Verarbeitung zugewiesen bekommen. Auf diese Weise kann eine einfache Vergleichbarkeit der Empfangssignale erreicht werden.

Um eine Selektion eines Empfangssignals erreichen zu können, wird vorgeschlagen, dass das Empfangssignal mit dem stärksten Pegel und/oder Pegeländerung selektiert wird. Hierdurch kann nicht nur vorteilhaft ein Kriterium für die Auswahl geschaffen werden, sondern es kann auch auf einfache Weise erreicht werden, dass eine zuverlässige Kommunikationsverbindung hergestellt wird, die von den weiteren Empfangssignalen möglichst wenig gestört wird. Eine entsprechende Elektronik kann beispielsweise hinzugezogen werden, um die weiteren, nicht ausgewählten Signale zu unterdrücken.

Damit ein Schlüssel bei mehreren Schlössern in Kommunikationsreichweite weiß, mit welchem Schloss er in Kommunikationsverbindung tritt, wird vorgeschlagen, dass schlossseitig ein Identifikationssignal ausgesendet wird. Dieses Identifikationssignal kann vorteilhaft zeitdiskret zu vorgebbaren Zeitpunkten oder auch kontinuierlich ausgesendet werden.

Darüber hinaus wird vorgeschlagen, dass schlüsselseitig ein Identifikationssignal ausgesendet wird. Dieses ermöglicht es dem Schloss, festzustellen, mit welchem Schlüssel es in Kommunikationsverbindung steht. So kann beispielsweise vorgesehen sein, dass schlossseitig die Kommunikationsverbindung über die Identifikationssignale mit einem ausgewählten Schlüssel hergestellt wird, wobei die weiteren Schlüssel bis zur Beendigung der Kommunikationsverbindung ihre Sendesignale einstellen. Die Zuverlässigkeit der Kommunikationsverbindung bezüglich Störbeeinflussung kann weiter verbessert werden.

In einer Weiterbildung wird vorgeschlagen, dass eine kryptisch verschlüsselte Zugangs- und/oder Zugriffsberechtigung verwendet wird. Hierdurch kann die Abhörsicherheit verbessert und dadurch auch der Missbrauch reduziert werden. Die Verschlüsselung kann beispielsweise in einem Algorithmus bestehen, der auf einer Rechnereinheit im Schlüssel und im Schloss separat abläuft, wobei nur die Ergebnisse über den Kommunikationskanal übertragen und im Schloss abgeglichen werden. Der Algorithmus kann dabei so ausgewählt sein, dass er eine hohe Abhörsicherheit bietet. Hierdurch kann vermieden werden, dass die Berechtigungsübermittlung unberechtigt durch Dritte abgehört wird und diese daraufhin einen gefälschten Schlüssel mit diesem Berechtigungscode herstellen, der für den missbräuchlichen Einsatz vorgesehen ist. Es kann vorgesehen sein, dass zur Verifikation der Daten nur ein Teil der verschlüsselten Daten, beispielsweise etwa die Hälfte, übertragen werden.

Weiterhin wird vorgeschlagen, dass die Kommunikationsverbindung störsicher ist. So kann vorgesehen sein, dass die Kommunikationsverbindung mittels geeigneter Codierungsverfahren zur Kanalcodierung und/oder darüber hinaus mit Fehlerkorrekturverfahren ausgebildet ist. Derartige Verfahren sind beispielsweise aus dem Stand der Technik Petersen, "Prüfbare und korrigierbare Codes", Ellweyn Berlekamp, "Algebraic Coding Theory", oder auch durch Joachim Swoboda, "Codierung zur Fehlerkorrektur und Fehlererkennung" bekannt. Kanalcodierungen finden sich beispielsweise in Steinbuch, Rupprecht, Nachrichtentechnik, Band II.

Um eine besonders einfache Bedienung erreichen zu können, wird vorgeschlagen, dass die Kommunikationsverbindung automatisch hergestellt wird. Auf diese Weise ist ein manuelles Eingreifen von berechtigten Personen nicht erforderlich. Dies ist aus ergonomischer Sicht insbesondere dann vorteilhaft, wenn keine Hand für eine manuelle Betätigung eines Schlosses verfügbar ist, oder wenn ein häufiger Zutritt und/oder Zugriff erforderlich ist.

Um die Sicherheit weiter zu erhöhen, kann vorgesehen sein, dass die Kommunikationsverbindung nur in einem vorgebbaren Zeitraum hergestellt wird. Auf diese Weise ist ein Zugriff beziehungsweise ein Zutritt außerhalb des vorgebbaren Zeitraums nicht möglich.

In einer weiteren Ausgestaltung wird vorgeschlagen, dass eine mehrkanalige Kommunikationsverbindung verwendet wird. Hierdurch kann nicht nur die Kapazität der Kommunikationsverbindung verbessert werden, sondern es kann darüber hinaus der Zeitaufwand für die Übertragung reduziert werden. Mehrere Kanäle der Kommunikationsverbindung können beispielsweise durch unterschiedliche Frequenzen, Zeitraster (Zeitmultiplex) oder dergleichen erreicht werden.

Darüber hinaus kann erreicht werden, dass durch die verwendeten Kanäle eine zusätzliche Sicherheit bezüglich der Berechtigung geschaffen wird, indem die Kommunikationsverbindung eine oder eine endliche Anzahl von Kanälen verwendet. Diese Ausgestaltung ermöglicht beispielsweise Unterscheidung von benachbart angeordneten Schlössern, die sich in Kommunikationsreichweite des Schlüssels befinden.

Damit auch bei in der Kleidung oder im Gepäck angeordneten Schlüsseln eine Kommunikationsverbindung hergestellt werden kann, wird vorgeschlagen, dass als Kommunikationsverbindung eine Nahfunkverbindung verwendet wird. Der Schlüssel muss nicht in Sichtkontakt zum Schloss sein, wie dies beispielsweise bei optischen Kommunikationsverbindungen erforderlich ist. Natürlich kann die Kommunikationsverbindung auch als kapazitive oder induktive Verbindung ausgebildet sein. Die Nahfunkverbindung scheint jedoch bezüglich ihrer Eigenschaften besonders bevorzugt.

Um die Störsicherheit bei einer hohen Datenrate weiter erhöhen zu können, wird vorgeschlagen, dass die Nahfunkverbindung als Modulationsart eine FSK- und/oder PSK-Modulation, beispielsweise eine 2-FSK, eine G-FSK, eine MSK-Modulation oder dergleichen, verwendet. Diese Modulationsarten zeichnen sich gegenüber den Basismodulationsarten durch eine per se höhere Störfestigkeit aus. Beschrieben sind solche Modulationsarten beispielsweise in Steinbuch, Rupprecht, Nachrichtentechnik, Band I.

In einer weiteren Ausgestaltung wird vorgeschlagen, dass die Kommunikationsverbindung gerichtet ist. So kann beispielsweise vorgesehen sein, dass entweder das Sendemittel und/oder das Empfangsmittel eine Richtantenne aufweisen, um Kommunikationsverbindungen nur in eine bestimmte Richtung zuzulassen. Vorteilhaft ist diese Ausgestaltung insbesondere bei dem Schloss, welches dadurch Empfangssignale von beispielsweise seitlich zum Schloss angeordneten Schlüsseln, die offensichtlich nicht einen Zutritt wünschen, ausgeblendet werden. Die Zuverlässigkeit kann weiter verbessert werden.

Sollte dennoch eine Störung auftreten, so wird vorgeschlagen, dass die ermittelte Zugangs- und/oder Zugriffsberechtigung angezeigt wird. Die Anzeige kann beispielsweise am Schlüssel oder auch am Schloss erfolgen und das Ergebnis der Prüfung der Zugangs- und/oder Zugriffsberechtigung signalisieren. Sollte bei vorhandener Berechtigung der Zugang beziehungsweise der Zugriff verwehrt werden, so kann ein Servicedienst gerufen werden, um die Störung zu beheben. Die Betriebssicherheit kann verbessert werden.

In einer vorteilhaften Weiterbildung wird vorgeschlagen, dass die Freigabe zeitbegrenzt erfolgt. Hierdurch kann eine erhöhte Sicherheit erreicht werden, weil nach erfolgter Freigabe ein Zutritt beziehungsweise ein Zugriff nur für einen kurzen, vorgebbaren Zeitraum gewährt wird. Sollte beispielsweise ein Schloss aufgrund einer Kommunikationsverbindung mit einem Schlüssel einen Zutritt beziehungsweise einen Zugriff gewähren, obwohl dieser nicht gewünscht beziehungsweise nicht wahrgenommen wird, kann die Sicherheit dadurch erhöht werden, dass kurze Zeit später die Freigabe widerrufen wird. Unberechtigten Dritten wird daher der Zugriff beziehungsweise der Zugang erschwert. Ein solcher Zeitraum kann zum Beispiel 3 s bis 5 s umfassen. Je nach Bedarf können auch längere oder kürzere oder sogar veränderliche Zeiträume vorgesehen sein. Das Erlöschen der Freigabe kann auch ein automatisches Schließen einer Tür zur Folge haben.

In einer weiteren vorteilhaften Ausgestaltung wird vorgeschlagen, dass bei einer Freigabe eine Tür, ein Tor und/oder eine Verschlusseinheit automatisch geöffnet wird. Dies ist insbesondere vorteilhaft für den Transportgüterbereich, wenn beispielsweise sperrige Güter aus einem geschützten Bereich heraus- oder in diesen Bereich hineintransportiert werden sollen. Eine manuelle Betätigung steht üblicherweise einem schnellen und zügigen Transport der Güter entgegen. Nach Durchtritt kann vorgesehen sein, dass ein automatisches Schließen ausgeführt wird. Die Verschlusseinheit kann beispielsweise auch eine Schiebetür, eine Klappe, eine Luke oder dergleichen sein.

In einer weiteren vorteilhaften Weiterbildung wird vorgeschlagen, dass der Schlüssel und/oder das Schloss einen Energiesparmodus einnehmen. Hierdurch kann der Energieverbrauch reduziert werden. Gerade bei einer lokalen Energieversorgung mittels Batterie oder Akkumulator kann die Betriebsdauer erhöht werden, wodurch geringerer Wartungsaufwand erforderlich ist.

Um die Kommunikationsverbindung auch bei Energiesparmodus zustande kommen zu lassen, wird vorgeschlagen, dass der Sender in vorgebbaren Zeitabständen ein Initüerungssignal aussendet. Bei geringer Sendeenergie kann ein sicheres Zustandekommen der Kommunikationsverbindung erreicht werden. Darüber hinaus kann natürlich auch vorgesehen sein, dass der Empfänger nur in vorgebbaren Zeitabständen empfangsbereit ist. Auch hierdurch lässt sich der Energieverbrauch weiter reduzieren. Es kann auch eine Kombination von beiden vorgesehen sein, wobei vorzugsweise die Zeitabstände derart gewählt werden, dass es zu Überlappungen des aktiven Sendens und aktiven Empfangens kommen kann. Diese Ausgestaltung kann sowohl bei einem Schlüssel als auch bei einem Schloss oder bei beiden zugleich vorgesehen sein.

In einer Weiterbildung wird vorgeschlagen, dass eine Energieversorgung über die Kommunikationsverbindung erfolgt. Die Kapazität einer lokalen Energieversorgung, beispielsweise einer Batterie oder eines Akkumulators, kann reduziert werden. Eine hohe Betriebsdauer kann erreicht werden. Die Reduzierung der Kapazität der Energieversorgung kann darüber hinaus das Volumen oder das Gewicht des Schlosses beziehungsweise des Schlüssels reduzieren.

Weiterhin wird vorgeschlagen, dass mittels des Verriegelungsmechanismus ein Drehknauf und/oder eine Türklinke mit einer Falle gekoppelt wird. Dies erlaubt eine einfache Nachrüstung bei vorhandenen Türen, Toren oder anderen Verschlusseinheiten. Dabei kann ein vorhandenes Design beziehungsweise eine vorhandene Konstruktion beibehalten werden.

Um festzustellen, ob der Zutritt beziehungsweise Zugriff auch wahrgenommen wurde, wird mit der Erfindung vorgeschlagen, dass eine Betätigung des Drehknaufs, der Türklinke, der Tür, des Tors und/oder der Verschlusseinheit mittels eines Sensors erfasst wird. Wurde der Zugriff beziehungsweise der Zutritt ausgeführt, kann anschließend nach Schließen die Freigabe aufgehoben werden, um unberechtigten Dritten den Zugriff beziehungsweise den Zutritt zu verwehren. Die Sicherheit kann weiter erhöht werden. Der Sensor kann beispielsweise als ein Berührungssensor an der Türklinke auf kapazitiver oder optischer Basis ausgebildet sein; er kann jedoch auch als Näherungssensor oder Lichtschranke ausgebildet sein.

Damit beispielsweise in sensiblen Bereichen die Gewährung des Zutritts beziehungsweise des Zugriffs nachgehalten werden kann, wird vorgeschlagen, dass die ermittelten Daten gespeichert werden. So kann beispielsweise gespeichert werden, wann und wie oft mit jedem einzelnen Schlüssel Zugang beziehungsweise Zugriff gewährt wurde. Darüber hinaus besteht die Möglichkeit, auch die Verwehrung des Zutritts beziehungsweise Zugriffs zu speichern. So kann beispielsweise festgestellt werden, welche Schlüssel zur unberechtigten Zutrittsverschaffung beziehungsweise Zugriffsgewährung verwendet werden sollten. Durch die Speicherung können die Daten für eine spätere, weitere Verwendung bereitgehalten werden.

Die ermittelten Daten können aber auch gemäß einer weiteren Ausgestaltung an eine Zentrale übermittelt werden. Hier können die Daten einer weiteren Verarbeitung zugeführt werden. So können beispielsweise Benutzungshäufigkeiten, Zutrittszeitpunkte und dergleichen einer statistischen Auswertung zugeführt werden. Ferner kann beispielsweise vorgesehen sein, dass die Daten für eine spätere Gebührenberechnung verwendet werden, wenn der Zugriff beziehungsweise der Zutritt gebührenpflichtig ist.

Darüber hinaus wird vorgeschlagen, dass die Freigabe durch die Zentrale erfolgt. Vorteilhaft kann erreicht werden, dass eine unberechtigte Manipulation des Schlosses reduziert werden kann. Die Zentrale kann beispielsweise prüfen, ob mit dem Schlüssel, mit dem eine Kommunikationsverbindung besteht, ein Zutritt erlaubt sein soll oder nicht. Ferner besteht die Möglichkeit, kurzfristig die Berechtigungen für einzelne Schlüssel anzupassen. So können beispielsweise verloren gemeldete Schlüssel gesperrt werden, wohingegen andere Schlüssel im Bedarfsfall mit zusätzlichen Berechtigungen versehen werden können. Eine hohe Flexibilität bezüglich des Einsatzes kann erreicht werden.

Mit einer vorteilhaften Ausgestaltung wird vorgeschlagen, dass eine Kommunikationsverbindung zwischen wenigstens zwei Schlössern hergestellt wird. Diese Ausgestaltung ermöglicht es, zwischen Schlössern Informationen auszutauschen, ohne dass eine hardwaremäßige Verbindung installiert werden müsste, also zusätzlicher Montageaufwand erforderlich wäre. Auf diese Weise können die Schlösser beispielsweise mit der Zentrale in Kommunikationsverbindung treten, um Daten zu übermitteln oder auch Freigabe von dieser zu erhalten. Können aufgrund kommunikationstechnischer Beschränkungen zur Kommunikation miteinander vorgesehene Schlösser nicht direkt miteinander kommunizieren, kann eine Relaisstation vorgesehen sein, um deren Kommunikation zu ermöglichen. Daneben oder auch zusätzlich kann die Herstellung einer Kommunikationsverbindung unter Zwischenschaltung weiterer Schlösser vorgesehen sein. Es kann vorgesehen sein, dass die Kommunikationsverbindung von den beteiligten Schlössern automatisch gesucht und gespeichert wird. Gerät ein zwischengeschaltetes Schloss in einen gestörten Zustand, kann vorgesehen sein, dass ein neuer Kommunikationsweg unter Zwischenschaltung eines anderen Schlosses gesucht wird. Vorzugsweise steht das Schloss am Ende der Kette mit der Zentrale in Kommunikationsverbindung. Der beste Kommunikationsweg kann beispielsweise aufgrund von Empfangssignalpegeln, Datendichte oder dergleichen ausgewählt werden.

In einer Weiterbildung wird vorgeschlagen, dass das Schloss ferngesteuert wird. So kann das Schloss beispielsweise im Notfall von einer zentralen Stelle in einen permanent geöffneten oder geschlossenen Zustand geschaltet werden. Ein geöffneter Zustand wäre beispielsweise im Notfall sinnvoll, um einen Fluchtweg bereitzustellen. Es kann aber auch ein Verschließen sinnvoll sein, wenn dadurch die Ausbreitung eines Brandes beispielsweise vermieden werden kann. Weitere Notfallszenarien sind denkbar, bei denen eine zentrale Steuerung zweckmäßig ist, beispielsweise bei einem Überfall oder dergleichen.

In einer weiteren Ausgestaltung wird vorgeschlagen, dass Empfangssignale von anderen Schlössern erkannt und ausgeblendet werden. So kann beispielsweise bei benachbart angeordneten Türen das Problem auftreten, dass die Schlösser sich mit ihren Sende-Empfangsmitteln gegenseitig stören. In diesem Fall ist es sinnvoll, dass anhand von Sendesignalen die Schlösser erkennen können, ob diese von einem Schlüssel oder von einem Schloss ausgesandt werden. Den Schlössern wird hiermit die Möglichkeit eröffnet, derartige Signale unberücksichtigt zu lassen und gegebenenfalls durch geeignete elektronische Mittel sogar auszublenden, um einen ungestörten Empfang von Signalen von Schlüsseln zu erreichen. So kann beispielsweise vorgesehen sein, dass das Identifikationssignal eines Schlosses einen schlosstypischen Bereich aufweist, an dem das Empfangsmittel eines anderen Schlosses erkennen kann, dass dieses Signal ebenfalls von einem Schloss ausgesendet wird. Durch geeignete Filter, die auf ein derartiges Signal reagieren, kann ein derartiges Signal sogar ausgeblendet werden. Die Störsicherheit der Kommunikationsverbindung sowie auch die Zuverlässigkeit bezüglich der Funktion kann weiter erhöht werden. Eine automatische Erkennung von Schlosssignalen durch andere Schlösser kann erreicht werden. Darüber hinaus kann eine solche Funktion gegebenenfalls auch für Schlüssel vorgesehen sein.

Wenn das Schloss und/oder der Schlüssel eine elektronische Schaltung zur Realisierung ihrer Funktion aufweisen, ist eine elektrische Energieversorgung erforderlich. Diese kann entweder in einer Energieversorgung aus einem öffentlichen Energieversorgungsnetz oder auch aus einer lokalen Energieversorgung sein. Bevorzugt ist jedoch eine Energieversorgung aus einer Batterie oder einem Akkumulator, wodurch ein mobiler, unabhängiger Betrieb erreicht werden kann. Da derartige Energiespeicher gewartet werden müssen beziehungsweise ausgetauscht werden müssen, wird mit der Erfindung vorgeschlagen, das Schloss und/oder den Schlüssel in einem Energiesparmodus zu betreiben. Auf diese Weise kann die Kapazität des Energiespeichers, und zwar des Akkumulators beziehungsweise der Batterie, reduziert werden. Daneben kann auch ein längerer Betrieb zwischen Wartungsintervallen vorgesehen sein. Kosten können eingespart werden.

Gemäß einem weiteren Vorschlag der Erfindung kann das Schloss durch ein Empfangssignal eines Schlüssels aus einem Energiesparmodus aktiviert werden. Das Schloss befindet sich in einem Energiesparmodus, wenn keine Schlüssel in Kommunikationsreichweite sind. Gelangt nun ein Schlüssel in Kommunikationsreichweite, so wird der Schlüssel ein Signal aussenden, das mittels der Empfangsmittel des Schlosses empfangen wird. Das Signal kann permanent, zeitdiskret oder auch auf Anforderung, beispielsweise durch Betätigen einer Taste am Schlüssel, ausgesendet werden. Dieses Signal schaltet das Schloss aus einem Energiesparmodus, in dem es keine Prüfungen und Freigaben vornimmt, in einen aktiven Zustand um, in dem die entsprechenden Funktionen zur Verfügung stehen. Ist nach Ausführung der Kommunikationsverbindung kein weiterer Schlüssel in Empfangsreichweite, kann vorgesehen sein, dass das Schloss automatisch den Energiesparmodus wieder einnimmt. Im Energiesparmodus kann der Verriegelungsmechanismus nicht im Sinne einer Freigabe betätigt werden. Der Energieverbrauch des Schlosses kann weiter reduziert werden. Darüber hinaus kann vorgesehen sein, dass zur Aktivierung ein vorgebbarer Mindestpegel des Empfangssignalpegels erforderlich ist. Wird dieser Pegel nicht erreicht, bleibt das Schloss im Energiesparmodus.

In einer vorteilhaften Ausgestaltung wird vorgeschlagen, dass beim Aktivieren des Schlosses aus einem Energiesparmodus heraus die Kommunikationsverbindung zu dem Schlüssel mit dem stärksten Empfangssignalpegel hergestellt wird. Dies ermöglicht es, mit der Aktivierung des Schlosses sofort mit einem Schlüssel eine Kommunikationsverbindung herzustellen. Ein schneller Verfahrensablauf kann erreicht werden.

In einer Weiterbildung wird vorgeschlagen, dass das Schloss durch eine manuelle Berührung, Betätigung und/oder durch ein Signal eines Sensors aktiviert wird. Diese Möglichkeit der Aktivierung kann alternativ oder zusätzlich zur Aktivierung durch das Empfangssignal eines Schlüssels vorgesehen sein. Dadurch, dass der Betrieb der Empfangsmittel im Energiesparmodus eingespart werden kann, kann der Energieverbrauch des Schlosses weiter reduziert werden. Darüber hinaus kann auch die Sicherheit weiter erhöht werden, da beispielsweise beim Vorbeilaufen einer Person mit einem Schlüssel mit einer zulässigen Berechtigung an dem Schloss der Schlüssel nicht automatisch in Kommunikationsverbindung mit dem Schloss treten kann, um das Schloss zu einer Freigabe zu veranlassen, obwohl überhaupt kein Zugriff beziehungsweise Zugang erwünscht ist. Ansonsten würde nämlich das Schloss Zutritt beziehungsweise Zugriff gewähren und unberechtigte Dritte könnte dieses ausnutzen.

Weiterhin wird vorgeschlagen, dass der Schlüssel durch ein Empfangssignal eines Schlosses aus einem Energiesparmodus aktiviert wird. Gerade bei einem Schlüssel, bei dem die Mobilität im Vordergrund steht, ist es zweckmäßig, den zum Betrieb des Schlüssels erforderlichen Energiespeicher so klein wie möglich vorzusehen. Der elektronische Schlüssel sollte daher einen möglichst geringen Energieaufwand aufweisen. Dies kann dadurch erreicht werden, dass der Schlüssel nur dann den Energiesparmodus verlässt, wenn dies zur Durchführung der Kommunikationsverbindung mit einem Schloss erforderlich ist. Ist die Kommunikationsverbindung beendet, kann vorgesehen sein, dass der Energiesparmodus automatisch wieder eingenommen wird. Darüber hinaus schafft diese Ausgestaltung die Möglichkeit, die Sicherheit gegen Abhören, beispielsweise des Identifikationszeichens, weiter zu erhöhen. Wird nämlich durch das Sendemittel des Schlüssels das Identifikationssignal permanent ausgesendet, besteht die erleichterte Möglichkeit, durch unberechtigte Dritte dieses Signal aufzuzeichnen und einen Schlüssel mit demselben Identifikationssignal herzustellen.

Als Entscheidungskriterium für eine Aktivierung aus einem Energiesparmodus wird vorgeschlagen, dass das Überschreiten eines vorgebbaren Referenzpegels durch den Empfangspegel verwendet wird. Eine Aktivierung auf Basis dieses Kriteriums kann mit für den bestimmungsgemäßen Betrieb ohnehin erforderlichen Baueinheiten verwirklicht werden, so dass der Aufwand und die hiermit verbundenen Kosten gering ausfallen können. Dieses Kriterium kann sowohl zur Aktivierung des Schlosses als auch des Schlüssels verwendet werden.

Eine weitere Verbesserung hinsichtlich der Sicherheit kann dadurch erreicht werden, dass der Schlüssel manuell aktiviert wird. So kann vorgesehen sein, dass der Schlüssel ausschließlich dann ein Signal sendet, wenn er hierzu durch manuelle Betätigung veranlasst wird. Die Betätigung kann beispielsweise durch Berühren einer Taste oder eines Sensors oder dergleichen vorgesehen sein. So kann beispielsweise vorgesehen sein, dass eine Kommunikationsverbindung nur solange bestehen kann, wie die manuelle Betätigung andauert. Entfällt die manuelle Betätigung, kann vorgesehen sein, dass der Schlüssel unverzüglich wieder in den Energiesparmodus wechselt. In diesem Modus ist das Herstellen einer Kommunikationsverbindung mit einem Schloss nicht vorgesehen.

Um Daten wie beispielsweise Berechtigungen oder dergleichen von einem Schlüssel auf einen anderen übertragen zu können, wird vorgeschlagen, dass eine Kommunikationsverbindung zwischen wenigstens zwei Schlüsseln hergestellt wird. So kann die Berechtigung eines Schlüssels mit einer Funktionsstörung in der Sende-/Empfangseinheit auf einen fehlerfreien Schlüssel übertragen werden. Auch können nachträglich zusätzliche Berechtigungen von einem Schlüssel auf einen anderen übertragen werden. Zum Übertragen der Daten kann beispielsweise eine Kopplungseinheit vorgesehen sein, damit gewährleistet ist, dass nur die gewünschten Schlüssel miteinander in Kommunikationsverbindung treten können.

Mit der Erfindung wird ferner ein Schloss für ein Zugangsberechtigungssystem mit einem mittels einer Steuereinheit steuerbaren Verriegelungsmechanismus und mit Sende-Empfangsmitteln zum Empfang eines Aufforderungssignals und zum Senden eines Antwortsignals und mit einer Signalpegelerfassungseinheit vorgeschlagen, wobei die Signalpegelerfassungseinheit einen Parameter aus dem Aufforderungssignal empfangsseitig zur Ermittlung einer Verzögerung eines Aussendens des Antwortsignals nutzt, wobei die Verzögerung des Aussendens des Antwortsignals durch einen Empfangssignalpegel, eine Empfangssignalpegeländerung und/oder eine Empfangsgüte des Aufforderungssignals bestimmt ist, und wobei die Sende-Empfangsmittel das Antwortsignal mit der ermittelten Verzögerung aussenden.

Die Signalpegelerfassungseinheit erlaubt es dem Schloss, den Pegel von empfangenen Signalen zu erfassen. Darüber hinaus kann vorgesehen sein, dass die Signalpegelerfassungseinheit die Pegel in vorgebbarer Weise klassifiziert. Die Signalpegelerfassungseinheit kann beispielsweise Gleichrichter, Diskriminatoren oder dergleichen umfassen. Darüber hinaus kann sie eine Diskretisierungseinheit aufweisen, mit der es möglich ist, einen erfassten Signalpegel einem Bereichswert zuzuordnen und gegebenenfalls einer digitalen Verarbeitung zugänglich zu machen. Die Sende-Empfangsmittel stehen mit der Steuereinheit in Kommunikationsverbindung, die die empfangenen Signale verarbeitet und gegebenenfalls die Sendemittel dazu veranlasst, entsprechende Sendesignale auszusenden. Die Steuereinheit steuert ferner den Verriegelungsmechanismus, der dafür zuständig ist, eine Kopplung zwischen einer Betätigungseinheit und einer Schließeinheit derart herzustellen, dass mit der Betätigung der Betätigungseinheit die Schließeinheit einen Verschluss freigibt. Die Pegelerfassungseinheit kann ferner dafür vorgesehen sein, die Feststellung des stärksten Pegels zu ermöglichen. Alle anderen Pegel können ausgeblendet werden.

Ferner wird vorgeschlagen, dass das Schloss wenigstens zwei Richtantenneneinheiten aufweist. Auf diese Weise können besonders ausgestaltete Empfangsbereiche beziehungsweise Sendebereiche ausgebildet werden. Dies ermöglicht eine flexible Anpassung an räumliche Gegebenheiten, um eine optimale Funktion zu erreichen. Darüber hinaus wird vorgeschlagen, dass sich die Wirkbereiche der Richtantenneneinheiten im wesentlichen in voneinander verschiedene Raumbereiche erstrecken. So kann beispielsweise vorgesehen sein, dass die Richtantenneneinheiten in entgegengesetzte Richtungen vom Schloss aus gesehen ausgerichtet sind. Dies ermöglicht es beispielsweise dem Schloss festzustellen, auf welcher Seite des Schlosses der mit dem Schloss in Kommunikationsverbindung stehende Schlüssel sich momentan befindet. Daneben kann vorgesehen sein, dass die Antenneneinheit keine Richtcharakteristik aufweist oder dass lediglich eine Richtantenneneinheit und eine Sende-Empfangseinheit vorgesehen sind.

In einer Weiterbildung wird vorgeschlagen, dass für jede der Antenneneinheiten ein eigenes Identifikationssignal verwendet wird. Dies erlaubt es dem Schloss, festzustellen, auf welcher Seite des Schlosses sich der Schlüssel befindet. So kann beispielsweise festgestellt werden, ob sich der Schlüssel innerhalb oder außerhalb eines Raumes befindet.

Zur Energieversorgung weist das Schloss vorteilhaft eine Energieversorgungseinheit auf, die als Batterie oder Akkumulator ausgebildet sein kann. Daneben kann auch eine Energieversorgung aus einem öffentlichen Netz vorgesehen sein. Vorzugsweise ist die Energieversorgungseinheit jedoch lokal angeordnet, damit das Schloss beispielsweise in Türen, Tore und dergleichen nachgerüstet werden kann, ohne dass größerer Montageaufwand insbesondere hinsichtlich der Elektrik erforderlich wäre.

In einer Weiterbildung wird vorgeschlagen, dass der Verriegelungsmechanismus einstückig mit dem Schloss ausgebildet ist. Hierdurch kann nicht nur die Sicherheit weiter erhöht werden, da ein unberechtigter Eingriff durch Dritte weiter erschwert werden kann, sondern auch Kosten können reduziert werden.

Darüber hinaus wird vorgeschlagen, dass das Schloss einen Sensor aufweist. Mit diesem kann das Schloss beispielsweise in einen aktiven Zustand überführt werden, wenn es unterschiedliche Betriebszustände aufweisen kann. So kann beispielsweise vorgesehen sein, dass das Schloss einen Energiesparmodus (sleep-modus) aufweist, bei dem sein Energieverbrauch besonders gering ist. Alle nicht erforderlichen Einheiten sind in diesem Zustand deaktiviert. Erst durch eine Berührung oder Betätigung oder auch durch ein Signal eines Näherungssensors wird das Schloss wieder in seinen Aktivzustand überführt und kann mit einem Schlüssel in Kommunikationsverbindung treten. Der Sensor kann beispielsweise als kapazitiver Sensor oder auch als optischer Sensor ausgebildet sein. Daneben oder zusätzlich kann auch ein Näherungssensor vorgesehen sein, der beispielsweise auf Infrarotbasis oder auch auf kapazitiver Basis die Annäherung und/oder das Vorhandensein einer Person ermittelt. Ebenso kann eine Lichtschranke vorgesehen sein.

Weiterhin wird vorgeschlagen, dass das Schloss eine Schnittstelle aufweist. Vorzugsweise ist die Schnittstelle dazu geeignet, eine Datenverbindung zu einer Zentrale herzustellen. Die Schnittstelle kann beispielsweise drahtlos in Form einer Funkschnittstelle, Infrarot- oder auch Mobilfunkschnittstelle ausgebildet sein. Es kann daneben vorgesehen sein, dass die Schnittstelle nur bedarfsweise aktiviert wird. Die Aktivierung kann sowohl vom Schloss als auch von der Zentrale vorgesehen sein.

Mit der Erfindung wird ferner ein Schlüssel für ein Zugangsberechtigungssystem mit Sende-Empfangsmitteln zum Empfang eines Aufforderungssignals und zum Senden eines Antwortsignals, wobei mit den Sende-Empfangsmitteln eine Kommunikationsverbindung zu einem Schloss herstellbar ist, und mit einer Signalpegelerfassungseinheit vorgeschlagen, wobei die Signalpegelerfassungseinheit einen Parameter aus dem Aufforderungssignal empfangsseitig zur Ermittlung einer Verzögerung eines Aussendens des Antwortsignals nutzt, wobei die Verzögerung des Aussendens des Antwortsignals durch einen Empfangssignalspegel, eine Empfangssignalpegeländerung und/oder eine Empfangsgüte des Aufforderungssignals bestimmt ist, und wobei die Sende-Empfangsmittel das Antwortsignal mit der ermittelten Verzögerung aussenden.

Wie bereits zum Schloss erläutert, kann mit der Signalpegelerfassungseinheit erreicht werden, dass der Schlüssel eine Kommunikationsverbindung mit dem Schloss aufbaut, dessen empfangenes Signal am stärksten ist. Auch hier kann die Signalpegelerfassungseinheit zur Diskretisierung und Klassifizierung der empfangenen Signale vorgesehen sein.

Ferner weist der Schlüssel vorteilhaft eine Energieversorgungseinheit auf. Mit der Energieversorgungseinheit kann erreicht werden, dass der Schlüssel, der zweckmäßigerweise als mobile Einheit ausgebildet ist und deshalb möglichst über keine drahtgebundene Energieversorgungsleitung verfügt, mit Energie versorgt wird. Da der Schlüssel möglichst leicht und handlich sein soll und darüber hinaus möglichst zuverlässig und wartungsarm betreibbar sein soll, sollte die Energieversorgung möglichst klein ausgebildet sein. Vorliegend wird vorgeschlagen, dass die Energieversorgungseinheit durch einen Akkumulator oder eine Batterie gebildet ist. Im Falle, dass der Schlüssel einen Transponder aufweist, kann vorgesehen sein, dass die Energieversorgungseinheit die Empfangsenergie umwandelt und als Energie für den Betrieb des Schlüssels bereitstellt. Hierzu wird vorgeschlagen, dass mittels der Energieversorgungseinheit Empfangsenergie zur Energieversorgung des Schlüssels bereitgestellt wird. In diesem Fall kann eine eigene Energieversorgung eingespart oder zumindest doch deutlich reduziert werden.

Ferner wird vorgeschlagen, dass der Schlüssel eine Betätigungstaste aufweist. Hierdurch kann erreicht werden, dass mittels manueller Betätigung eine Kommunikationsverbindung zum Schloss hergestellt wird. Daneben kann vorgesehen sein, dass zwischen einem manuellen oder einem automatischen Betrieb gewechselt wird. Im automatischen Betrieb stellt der Schlüssel automatisch eine Kommunikationsverbindung zu einem Schloss her, zu dem er in Kommunikationsreichweite steht. Dagegen kann im manuellen Betrieb vorgesehen sein, dass lediglich während einer Betätigung oder auch aufgrund einer Betätigung eine Kommunikationsverbindung hergestellt wird. Eine hohe Flexibilität bezüglich des Betriebs kann erreicht werden.

In einer Weiterbildung wird vorgeschlagen, dass der Schlüssel eine Anzeigeeinheit aufweist. Mit der Anzeigeeinheit kann beispielsweise eine Störungsmeldung, eine Freigabemeldung des Schlosses oder dergleichen angezeigt werden. Darüber hinaus ermöglicht die Anzeigeeinheit das Anzeigen des Energieversorgungszustands, beispielsweise den Ladezustand des Akkumulators oder der Batterie.

Weiterhin wird vorgeschlagen, dass der Schlüssel eine Antenneneinheit mit einer im wesentlichen Kugelcharakteristik aufweist. Vorteilhaft ist die Ausrichtung des Schlüssels bezüglich des Herstellens der Kommunikationsverbindung mit einem Schloss unerheblich. So ist es zum Beispiel nicht erforderlich, den Schlüssel aus der Tasche zu nehmen, damit dieser in Kommunikationsverbindung mit dem Schloss treten kann. Es ist auch nicht erforderlich, den Schlüssel in eine bestimmte Position zu bringen, damit er in Kommunikationsverbindung mit dem Schloss treten kann. Daneben kann jedoch vorgesehen sein, dass die Antenneneinheit eine Richtcharakteristik aufweist. In diesem Fall muss der Schlüssel mit seiner Richtcharakteristik auf das Schloss gerichtet werden, mit dem er eine Kommunikationsverbindung aufbauen soll. Diese Ausgestaltung ermöglicht eine hohe Störsicherheit bezüglich der Kommunikationsverbindung, weil Signale außerhalb des Richtbereiches so stark gedämpft werden, dass sie die Kommunikationsverbindung nicht oder nur geringfügig beeinträchtigen können.

Damit der Schlüssel mit den erforderlichen Daten versehen werden kann, wird vorgeschlagen, dass der Schlüssel eine Kommunikationsschnittstelle aufweist. Die Schnittstelle kann drahtlos als Nahfunktionsschnittstelle wie beispielsweise Blue-Tooth, Infrarot oder dergleichen ausgebildet sein. Sie kann aber auch drahtgebunden sein, beispielsweise mittels kontaktierbarer Kontaktflächen, wobei die Schnittstelle als RS232-, IEEE-, USB-Schnittstelle oder dergleichen ausgebildet sein kann. Der Schlüssel kann über die Schnittstelle mit einer Datenverarbeitungsanlage, einem PC oder auch einem weiteren Schlüssel in Kommunikationsverbindung gebracht werden, um Daten wie Berechtigungen, Identifikationscodes und dergleichen zu erhalten. Zur Erhöhung der Sicherheit können die Daten verschlüsselt sein. Es kann beispielsweise vorgesehen sein, dass Daten direkt von einem Schlüssel auf einen anderen übertragen werden können. So kann zum Beispiel ein Schlüssel als Masterschlüssel Berechtigungen in vorgebbarer Weise auf Slave-Schlüssel übertragen. Darüber hinaus kann vorgesehen sein, dass Daten von einem ersten Schlüssel auf einen zweiten übertragen werden, wobei die übertragenen Daten im ersten Schlüssel gelöscht werden. Weist zum Beispiel der erste Schlüssel eine Funktionsstörung auf, so kann hierdurch eine Kopie in Form des zweiten Schlüssels erzeugt werden, wobei zugleich der erste Schlüssel vollständig unbrauchbar gemacht wird. Missbrauch unter Nutzung des ersten Schlüssels kann vermieden werden. Natürlich können Daten auch lediglich ergänzt, geändert oder teilgelöscht werden. Auf diese Weise kann der Schlüssel gewartet werden.

Ferner wird mit der Erfindung ein Verfahren zur Kommunikation, vorzugsweise zum Programmieren eines Schlosses einer wenigstens zwei Schlösser aufweisenden Schließanlage vorgeschlagen, wobei eine Einheit insbesondere zum Programmieren mit einem Schloss in Kommunikationsverbindung gebracht wird und dass über dieses Schloss ein weiteres Schloss über eine Kommunikationsverbindung angesprochen und programmiert wird.

Vorteilhaft ist es nicht erforderlich, dass jedes Schloss vor Ort im eingebauten Zustand aufgesucht werden muss, damit es programmiert werden kann. Vielmehr ermöglicht die Erfindung, dass lediglich ein einziges Schloss zu kontaktieren ist, über welches dann die weiteren Schlösser programmiert werden können. Hierzu stehen die Schlösser untereinander vorzugsweise in Kommunikationsverbindung. Die Kommunikationsverbindung kann zeitdiskret oder auch kontinuierlich bestehen. Ist die Entfernung zwischen zwei Schlössern zu groß, um eine direkte Kommunikation zu ermöglichen, kann auch die Zwischenschaltung einer Relaisstation (Repeater) vorgesehen sein. Mit einem Datenpaket können auch mehrere Schlösser programmiert werden, beispielsweise indem die Identifikationen der zu programmierenden Schlösser im Datenpaket angegeben werden.

Weiterhin kann über die Kommunikationsverbindung ein Datenpaket mit einer Schlossidentifikation gesendet werden. Die Schlossidentifikation kann als Zieladresse des Datenpakets dienen. Das Datenpaket kann demzufolge solange weitergeleitet werden, bis es am Schloss mit der zugehörigen Identifikation empfangen wird. Natürlich kann auch eine Identifikation der Einheit vorgesehen sein, die es ermöglicht, von dem jeweiligen Schloss ein Datenpaket zu der Einheit zurückzusenden. Auf diese Weise können die Schlösser und die Einheit bidrektional in Kommunkationsverbindung miteinander stehen, ohne dass eine direkte Kommunikationsverbindung hergestellt werden muss.

Nach einer weiteren Ausgestaltung kann vorgesehen sein, dass das Schloss ein empfangenes Datenpaket mit einer dem Schloss nicht zugehörigen Schlossidentifikation wieder aussendet. Auf diese Weise kann eine automatische Weiterleitung des Datenpakets zu dem zugehörigen Schloss erreicht werden. Natürlich kann das Datenpaket auch zum Programmieren des Schlosses selbst verwendet werden, wenn beispielsweise neben einer fremden Schlossidentifikation auch die vom Schloss selbst im Datenpaket enthalten ist. Dabei kommt es nicht darauf an, wieviele Schlösser zwischengeschaltet sind. Es ist lediglich erforderlich, dass das Datenpaket über die Schloss-Schloss-Kommunikationsverbindung weitergeleitet wird.

Um zu vermeiden, dass ein bereits weitergeleitetes Datenpaket nochmals zum Aussenden anfällt, kann vorgesehen sein, dass ein Schloss ein Aussenden eines Datenpakets mit einer fremden Schlossidentifikation speichert. Auf diese Weise können Mehrfachsendungen vermieden werden, wodurch Energie und auch Kommunikationskapazität eingespart werden kann.

Ferner wird vorgeschlagen, dass das Speichern des Aussendens eines Datenpakets mit einer fremden Schlossidentifikation zeitlich begrenzt wird. Dies ermöglicht es, die Speicherkapazität möglichst gering zu halten, um den technischen Aufwand und die Kosten reduzieren zu können. Vorzugsweise wird die Speicherkapazität so bemessen, dass zirkulierende Umläufe von Datenpaketen in der Schließanlage vermieden werden können. Vorzugsweise ist der Zeitrahmen vorgebbar, so dass er an die jeweiligen tatsächlichen Randbedingungen angepasst werden kann.

Ferner kann vorgesehen sein, dass das Speichern von Datenpaketen mit einer fremden Schlossidentifikation auf eine vorgebbare Anzahl begrenzt wird. Auch diese Ausgestaltung ermöglicht es, die Speicherkapazität weiter zu optimieren, so dass Kosten gering gehalten werden können.

Gemäß einer weiteren Ausgestaltung wird vorgeschlagen, dass ein Datenpaket mit einer allgemeinen oder schlossgruppenbezogenen Identifikation verwendet wird. Auf diese Weise können beispielsweise zentrale Steuerungsfunktionen wie Notöffnung, Zeitsteuerungen und dergleichen realisiert werden.

Darüber hinaus kann vorgesehen sein, dass eine Kommunikationsverbindung zwischen dem Schloss und der Einheit nach Erteilung einer Berechtigung hergestellt wird. Auf diese Weise kann die Sicherheit erhöht werden, weil es unberechtigten Dritten erschwert wird, die Schlösser zu manipulieren. Die Berechtigung kann in Form einer Kodierung oder dergleichen vorgesehen sein. Darüber hinaus kann vorgesehen sein, dass nur eine bestimmte Auswahl von Schlössern zur Kommunikation mit der Einheit vorgesehen ist. Diese können beispielsweise in einem sicheren Bereich angeordnet sein, der für unberechtigte Dritte nur erschwert zugänglich ist. Die Sicherheit kann weiter verbessert werden.

Gemäß einer weiteren Ausgestaltung wird vorgeschlagen, dass das Schloss eine Liste mit fremden Schlossidentifikationen verwendet, deren Datenpaket ausgesendet wird. Auf diese Weise können ungünstige Kommunikationswege von der Einheit zum bestimmungsgemäßen, zu programmierbarenden Schloss ausgeschlossen werden. Vorzugsweise enthält die Liste die Schlossidentifikationen der Schlösser, die von der Einheit über das jeweilige Schloss kommunikationsverbindungsmäßig erreichbar sein sollen. Erhält das Schloss ein Datenpaket mit einer fremden Schlossidentifkation, die nicht in der Liste geführt ist, so wird diese nicht ausgesendet. Die Kommunikationskapazität kann weiter reduziert werden.

Weiterhin kann vorgesehen sein, dass Schlosszustandsdaten schlossseitig abrufbar gespeichert werden. Schosszustandsdaten können beispielsweise Betriebszustände, Zustand einer Energieversorgung oder dergleichen sein. Diese können in einer separaten Speichereinheit gespeichert sein, und über eine Zentrale oder die Einheit abgerufen werden. Dazu erhält das Schloss über einen vorgenannten Kommunikationsweg ein Datenpaket, welches das jeweilige Schloss auffordert, seine Schlosszustandsdaten in Form eines Datenpakets an die Einheit beziehungsweise die Zentrale zurückzusenden. Hierzu kann eine Identifikation zum Einsatz kommen, mit der die Einheit beziehungsweise die Zentrale identifiziert ist.

Um ein unnötiges Zirkulieren von Datenpaketen in der Schließanlage zu vermeiden, kann ferner vorgesehen sein, dass die Datenpakete mit einer Gültigkeitsdauer versehen sind. Wird die Gültigkeitsdauer überschritten, so werden empfangene Datenpakete von den Schlössern nicht mehr ausgesendet. Die Gültigkeit kann beispielsweise in einem Datum, einer Uhrzeit, einer besonderen Kodierung oder dergleichen bestehen.

Weitere Vorteile und Merkmale sind der folgenden Beschreibung von Ausführungsbeispielen zu entnehmen. Gleiche Bauteile sind mit gleichen Bezugszeichen bezeichnet. Die Zeichnungen sind Schemazeichnungen und dienen lediglich der Erläuterung der vorliegenden Erfindung.

Es zeigen:
Fig. 1 eine schematische, horizontale Schnittansicht durch eine geschlossene Tür mit einem erfindungsgemäßen Schloss,
Fig. 2 einen erfindungsgemäßen Schlüssel zur Ausführung des erfindungsgemäßen Verfahrens,
Fig. 3 eine schematische Darstellung der Baugruppen des erfindungsgemäßen Schlüssels,
Fig. 4 eine schematische Darstellung einiger Baugruppen des erfindungsgemäßen Schlosses,
Fig. 5 eine Datenstruktur eines vom erfindungsgemäßen Schloss ausgesendeten Kommunikationssignals und
Fig. 6 eine vertikale Schnittansicht durch die Tür mit dem erfindungsgemäßen Schloss und einer schematisch dargestellten Richtwirkung der verwendeten Antenneneinheit.
Fig. 7 schematisch eine Schließanlage mit drei Funkschlössern sowie einer Einheit, die in Kommunikationsverbindung stehen.

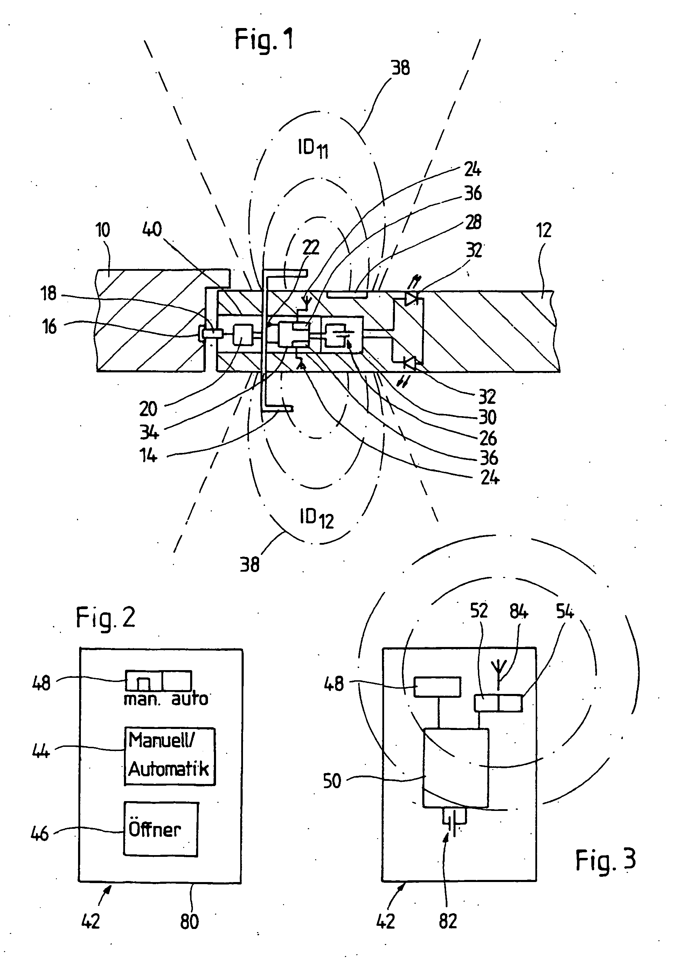

Fig. 1 zeigt eine horizontale Schnittansicht einer geschlossenen Tür 12 mit einem Schloss 40, dessen Falle 18 in eine Aussparung 16 der Türzarge 10 eingreift. Mittels eines Verriegelungsmechanismus 20 ist die Falle 18 mit einer Türklinke 14 koppelbar, so dass im gekoppelten Zustand manuell durch Betätigung der Türklinke 14 die Falle 18 außer Eingriff mit der Aussparung 16 gebracht werden kann, damit die Tür 12 in die geöffnete Stellung geschwenkt werden kann. Der Verriegelungsmechanismus 20 ist durch eine Steuereinheit 34 elektrisch steuerbar.

Die Steuereinheit 34 liefert ein Signal an den Verriegelungsmechanismus 20, woraufhin der Verriegelungsmechanismus 20 die Kopplung zwischen Türklinke 14 und Falle 18 herstellt oder nicht. Im vorliegenden Fall ist vorgesehen, dass die Kopplung unterbrochen ist, wenn die Steuereinheit 34 kein Signal liefert. Für eine Kopplung zwischen der Klinke 14 und der Falle 18 ist dagegen ein aktives Energiesignal erforderlich. Hierdurch wird erreicht, dass im gestörten Betrieb des Schlosses 40, das heißt, auch bei ausgefallener Energieversorgung ein unberechtigtes Öffnen der Tür 12 auf jeden Fall vermieden wird.

Zur Energieversorgung weist das Schloss 40 ein Batteriefach 30 mit einer Batterie 26 auf, die die Energieversorgung des Schlosses 40 sicherstellt. Zu Wartungszwecken ist das Batteriefach 30 über einen Batteriefachdeckel 28 zugänglich, um beispielsweise die Batterie 26 austauschen zu können.

Die Steuereinheit 34 weist ferner zwei Sende-Empfangseinheiten 36 auf, die jeweils mit einer Richtfunkantenne 24 verbunden sind. In der vorliegenden Ausgestaltung ist vorgesehen, dass die Richtfunkantenne 24 sowohl zum Senden als auch zum Empfangen verwendet wird. Daneben kann natürlich vorgesehen sein, dass zum Senden und Empfangen jeweils unterschiedliche Richtfunkantennen zum Einsatz kommen.

Das vorliegende Ausführungsbeispiel verwendet zwei Richtfunkantennen 24, damit mittels der Steuereinheit 34 festgestellt werden kann, auf welcher Seite vom Schloss 40 sich der Zugangsberechtigung anfordernde Schlüssel 42 befindet. Dies ist beispielsweise dann vorteilhaft, wenn für den Zutritt eines Raumes eine andere Berechtigung erforderlich ist, als für dessen Verlassen. So kann beispielsweise vorgesehen sein, dass für das Verlassen des Raums überhaupt keine Berechtigung erforderlich ist. In diesem Fall könnte beispielsweise die zweite Sende-Empfangseinheit 36 mit ihrer Richtfunkantenne 24 entfallen. Über mechanische Mittel könnte dann sichergestellt werden, dass die Türklinke 14 auf der Seite des Schlosses, die keine Berechtigung erfordert, in permanenter Kopplung mit der Falle 18 steht.

Die Steuereinheit 34 ist ferner mit einem Berührungssensor 22 in Kontakt, mit dem es möglich ist, die Berührung der Türklinke 14 zu detektieren. Vorliegend ist der Sensor 22 als kapazitiver Sensor ausgebildet, weil die Türklinke 14 aus einem elektrisch leitfähigen Werkstoff gebildet ist. Sobald die Türklinke 14 von einer Person berührt wird, liefert der Sensor 22 ein Signal an die Steuerung 34, welche dieses Signal weiter auswertet.

Darüber hinaus ist die Steuereinheit 34 mit zwei Leuchtdioden 32 verbunden, die nach jeder Seite der Tür 12 ein optisches Signal liefern können. Die Leuchtdioden 32 werden vorliegend dann betätigt, wenn die Steuereinheit 34 eine Freigabe für einen Schlüssel festgestellt hat. Um Energie zu sparen, werden die Leuchtdioden 32 in einem getakteten Blinkzustand betrieben. Die Signalisierung der Freigabe nach beiden Seiten der Tür 12 hat darüber hinaus den Vorteil, dass, wenn auf beiden Seiten der Tür 12 Personen den Durchgang wünschen, aber nur eine Freigabe bearbeitet werden kann, beide Personen die Freigabe signalisiert bekommen. Hierdurch kann vermieden werden, dass eine Person im Schwenkbereich der Tür 12 verletzt wird.

In Fig. 2 ist ein erfindungsgemäßer Schlüssel 42 dargestellt, mit dem das Schloss 40 in Fig. 1 betätigt werden kann. Der Schlüssel 42 weist ein Gehäuse 80 auf, in dem zwei Tasten 44 und 46 angeordnet sind. Die Taste 44 ist als Umschalttaste ausgebildet. Sie dient dazu, den Schlüssel 42 bedarfsgerecht zwischen einem manuellen und einem automatischen Betriebszustand umzuschalten. Statt einzelner Tasten kann natürlich auch ein Tastenfeld vorgesehen sein, wodurch sich die Möglichkeit der Implementation weiterer Bedienfunktionen ergibt. Ferner ist eine Öffnungstaste 46 vorgesehen, mit der im manuellen Betrieb des Schlüssels 42 ein Schloss 40 geöffnet werden kann. Weiterhin weist der Schlüssel 42 eine Anzeigeeinheit 48 auf, mit der der aktuelle Betriebszustand "manuell" oder "automatisch" angezeigt wird.

Fig. 3 stellt den schematischen Aufbau des Schlüssels 42 hinsichtlich seiner Funktion dar. Auch der Schlüssel 42 weist eine Steuereinheit 50 auf, die von einer Batterie 82 mit Energie versorgt wird. Da der Schlüssel 42 möglichst handlich und leicht sein soll, ist die gesamte Steuerung auf einen geringen Energieverbrauch ausgelegt. Dadurch kann auch die Batterie 82 mit geringer Kapazität ausgelegt sein. Die Steuereinheit 50 steuert die Anzeigeeinheit 48. Sie ist ferner (hier nicht dargestellt) mit den Tasten 44, 46 verbunden. Darüber hinaus ist die Steuereinheit 50 mit einer Sendeeinheit 52 und einer Empfangseinheit 56 in Kommunikationsverbindung. Beide Einheiten 52, 56 stehen mit einer Antenneneinheit 84 in Kommunikationsverbindung. Die Antenneneinheit 84 ist vorliegend für eine im wesentlichen kugelförmige Antennencharakteristik ausgelegt. Hierdurch ist es im automatischen Betrieb im Unterschied zu einer Kommunikationsverbindung auf Ultraschall-, Richtfunk- oder Infrarotbasis nicht erforderlich, den Schlüssel 42 zur Betätigung des Schlosses 40 ausgerichtet bereitzuhalten. Er muss lediglich in den Kommunikationsbereich des Schlosses 40 gebracht werden, um eine Kommunikationsverbindung herzustellen.

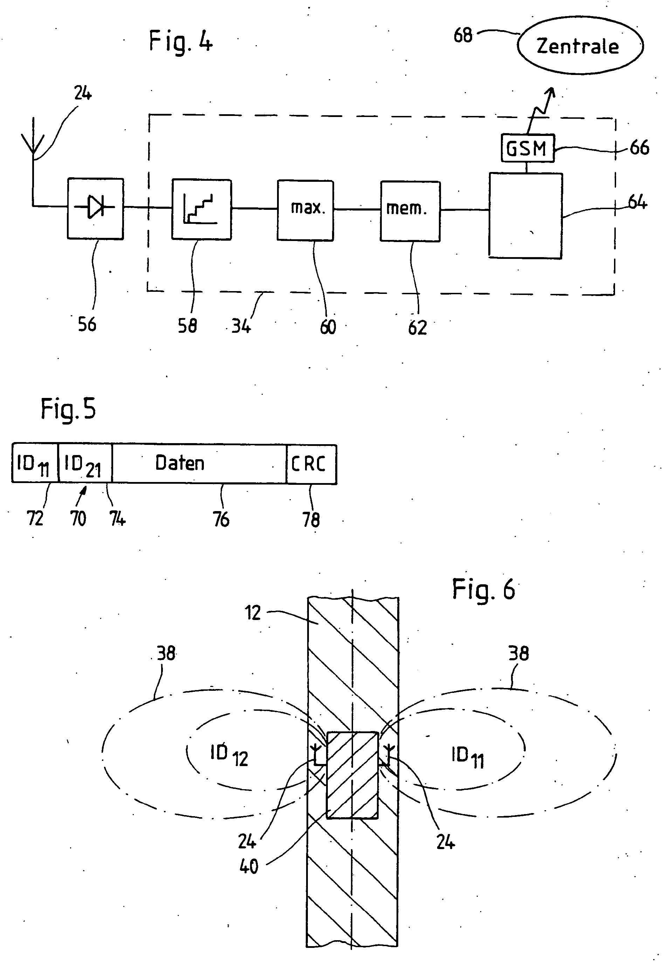

In Fig. 4 sind Funktionseinheiten des Schlosses 40 schematisch dargestellt, um den Verfahrensablauf zu verdeutlichen. Die Richtfunkantennen 24 ist mit einer Empfangseinheit 56 verbunden, die die Signale von in Reichweite befindlichen Schlüsseln empfängt und auswertet. Die Signale werden an einen Klassifizierer 58 weitergeleitet, der die unterschiedlichen Empfangspegel klassifiziert. Mit einem Entscheider 60 wird das Signal mit der maximalen Klassifizierung für die weitere Kommunikation ausgewählt. Die empfangenen Daten werden in einem Speicher 62 gespeichert und einer Rechnereinheit 64 übermittelt. Diese führt die Überprüfung der Berechtigung durch und liefert bei positivem Ergebnis ein Signal an den Verriegelungsmechanismus 20, so dass die Falle 18 mit der Klinke 14 gekoppelt wird.

Die Rechnereinheit 64 startet daraufhin einen Timer (hier nicht dargestellt), der nach einem Zeitablauf von etwa fünf Sekunden das Signal an den Verriegelungsmechanismus 20 zurücksetzt, so dass die Kopplung zwischen der Türklinke 14 und der Falle 18 aufgehoben wird. Die Rechnereinheit 64 steht über ein GSM-Modul 66 über das öffentliche GSM-Netz mit einer Zentrale 68 in Kommunikationsverbindung. So können die der Freigabe zugrundeliegenden Daten und die Freigabe selbst an die Zentrale übermittelt werden, um diese Daten beispielsweise für eine spätere Verwendung auswerten zu können.

In der vorliegenden Ausgestaltung ist ferner vorgesehen, dass die Zentrale 68 eine Freigabe an die Rechnereinheit 64 übermitteln kann. Dies kann zum Beispiel für einen Notfall vorgesehen sein, bei dem es erforderlich ist, dass ungehinderter Zugang möglich ist, beispielsweise im Brandfall oder dergleichen. In diesem Fall erhält die Rechnereinheit 64 ein entsprechendes Signal von der Zentrale 68 und schaltet den Verriegelungsmechanismus 20 in den gekoppelten Zustand. In diesem Fall wird ein Timer nicht gestartet. Es kann jedoch auch vorgesehen sein, dass die Zentrale 68 eine Freigabe lediglich für einen einzigen Zutritt gewährt. In diesem Fall würde der Timer wieder gestartet, so dass der Zutritt nur für einen kurzen Zeitraum gewährt wird.

Fig. 5 zeigt ein Signal 70, wie es in der vorliegenden Ausgestaltung zur Informationsübermittlung verwendet wird. Im vorliegenden Fall ist das Signal vom Schlüssel 42 ausgesendet, dem der Identifikationscode ID21 zugewiesen wurde. In dem Signal 70 findet sich dieser Identifikationscode an der Stelle 74, die für den Identifikationscode des Absenders vorgesehen ist. Vorliegend ist vorgesehen, dass jeder Schlüssel einen eigenen Identifikationscode aufweist. Es kann aber auch vorgesehen sein, dass bestimmte Schlüsselgruppen einen gemeinsamen Identifikationscode verwenden.

Im ersten Feld 72 des Signals 70 ist der Identifikationscode des Adressaten, und zwar des Schlosses 40, mit dem die Kommunikationsverbindung hergestellt wurde, angegeben. Hierdurch ist sichergestellt, dass das Schloss 40 erkennen kann, ob der Schlüssel 42 mit ihm in Kommunikationsverbindung steht. Sollte in unerwünschter Weise ein weiteres Schloss dieses Signal empfangen, kann es bereits anhand des Identifikationscodes ID11 feststellen, dass es nicht in Kommunikationsverbindung mit dem Schlüssel 42 treten soll. Es wird deshalb in die Kommunikationsverbindung nicht eingreifen. In einem Bereich 76 werden die für die Ermittlung der Freigabe erforderlichen Daten angeordnet. Diese sind zusätzlich mit einer Fehlercodierung versehen, deren Redundanz (CRC) im Bereich 78 des Informationssignals 70 angeordnet sind. Sollte das Empfangssignal 70 aufgrund von äußeren Störungen gestört werden, besteht die Möglichkeit, dass die Steuereinheit 34 das empfangene Signal einer Fehlerkorrektur unterzieht, um die Störungen zu beheben. Derartige Störungen können beispielsweise durch elektrische Schalthandlungen, den Betrieb weiterer elektrischer Geräte oder dergleichen verursacht sein.

Bei einem Signal, welches vom Schloss 40 ausgesendet wird, sind im Unterschied zum Signal nach Fig. 5 die Identifikationscodes in den Feldern 72 und 74 vertauscht, denn das Feld 72 enthält immer den Adressaten, wohingegen das Feld 74 den Absender enthält. Bei einer Mehrzahl von sich im Empfangsbereich befindlichen Schlüsseln ist daher sichergestellt, dass lediglich der Schlüssel mit dem zugehörigen Identifikationscode ID21 auf dieses Signal reagiert. Die anderen Schlüssel stellen den Unterschied im Identifikationscode fest und greifen nicht in die Kommunikationsverbindung ein.

Fig. 6 verdeutlicht den Zustand, dass das Schloss 40 zwei Identifikationscodes ID11 und ID12 aufweist. Schlossseitig ist es auf diese Weise möglich, festzustellen, von welcher Seite mit einem Schlüssel die Gewährung des Zutritts angefordert wird. So kann für den Durchtritt in unterschiedliche Richtungen eine unterschiedliche Berechtigung vorgesehen sein.

Fig. 6 zeigt ferner die Richtwirkung der Richtfunkantennen 24, die durch die Linien 38 dargestellt ist. Bei anderen Ausgestaltungen kann es jedoch auch vorgesehen sein, dass das Schloss lediglich eine einzige Sende-Empfangseinheit aufweist, die mit einer Funkantenneneinheit versehen ist, die eine andere Richtcharakteristik oder auch eine Kugelcharakteristik bezüglich der Sende-/Empfangseigenschaften aufweist.

Im einzelnen läuft das Verfahren zur Erwirkung einer Freigabe wie folgt ab. Eine Person, die mit einem elektronischen Schlüssel 42 versehen ist, bewegt sich auf einen Raum zu, der durch eine Tür 12 mit einem erfindungsgemäßen Schloss 40 verschlossen ist. Das Schloss 40 befindet sich in einem Energiesparmodus, aus dem es auf Anforderung durch ein Initiierungssignal eines Schlüssels 42 in einen aktiven Zustand wechselt. Der Schlüssel 42 ist in der vorliegenden Ausgestaltung im manuellen Betrieb, das heißt, auch der Schlüssel 42 befindet sich in einem Energiesparmodus. Die Person bewegt sich mit dem Schlüssel 42 in eine Kommunikationsreichweite zum Schloss 40, die vorliegend ca. 0,5 bis 1 m beträgt. Sie kann bedarfsweise kleiner gewählt werden, beispielsweise kleiner als 0,4 m, vorzugsweise in einem Bereich von ungefähr 0,1 bis 0,3 m. Durch Ausgestaltung der Antennen und der Sendeleistung kann dieser Bereich bedarfsgerecht angepasst werden.

Sobald die Person die Kommunikationsreichweite erreicht hat, betätigt sie die Öffnungstaste 46 des Schlüssels 42. Dieser sendet nunmehr ein Initiierungssignal, welches vorliegend lediglich in dem Identifikationscode ID21 besteht. Dieses Signal wird in gepulster Weise wiederholt gesendet, solange die Taste 46 gedrückt gehalten wird.

Im Energiesparmodus sind im Schloss 40 sämtliche nicht erforderlichen Funktionen deaktiviert. Lediglich der Empfänger wird zyklisch aktiviert, um empfangsbereit für von Schlüsseln ausgesendete Identifikationscodesignale zu sein. Das Schloss 40 empfängt nun das Identifikationscodesignal ID21 des Schlüssels 42 und wechselt vom Energiesparmodus in einen aktiven Zustand, in dem sämtliche Funktionseinheiten in Bereitschaft stehen. Das Schloss 40 sendet ebenfalls sein Identifikationscodesignal ID11, welches vom Schlüssel 42 empfangen wird. Daraufhin startet der Datenaustausch, in dessen Folge die Rechnereinheit 64 die Berechtigung prüft und bei vorliegender Berechtigung ein Signal an den Verriegelungsmechanismus 20 ausgibt. Die ermittelte Freigabe der Rechnereinheit 64 wird mittels der Leuchtdioden 32 durch Blinken angezeigt. Zugleich wird in der Rechnereinheit 64 ein nicht dargestellter Timer gestartet, der die Freigabe nach fünf Sekunden zurücksetzt. Mittels des Sensors 22 erfasst die Steuereinheit 34 die Betätigung der Tür 12 und setzt daraufhin die Freigabe unabhängig vom Timer zurück. Die Steuereinheit 34 übermittelt den Befehl der Entkopplung an den Verriegelungsmechanismus 20.

Vorliegend ist die Falle 18 derart ausgestaltet, dass beim Schließen der Tür 12 diese wieder automatisch in die entsprechende Aussparung der Zarge 10 eingreift. Nach Durchtritt der Person ist die Tür 12 also wieder geschlossen. Zu diesem Zweck ist die Tür 12 mit einem nicht näher dargestellten Aktuator gekoppelt, der automatisch eine geeignete Schließbetätigung der Tür 12 sicherstellt, um das Eingreifen der Falle 18 in der Aussparung 16 zu gewährleisten.

Befinden sich in einer weiteren Ausgestaltung zwei Schlüssel im Kommunikationsbereich mit dem Schloss 40, so wird das Schloss 40 beide Identifikationssignale der Schlüssel empfangen und über die in Fig. 4 dargestellte Funktionskette das Signal mit dem stärksten Signalpegel auswählen. Das Schloss 40 sendet dann ein Informationssignal gemäß Fig. 5 aus, in dem der Identifikationscode des ausgewählten Schlüssels angegeben ist. Mit diesem wird dann die Kommunikationsverbindung hergestellt, woraufhin sich der zweite Schlüssel nicht weiter an der Kommunikationsverbindung beteiligt.

Auf diese Weise wird ein möglicher Kommunikationskonflikt mit mehreren Schlüsseln abgearbeitet.

Darüber hinaus kann es wünschenswert sein, dass neben der statischen Pegelermittlung auch eine Pegeländerung bei der Auswahl des Schlüssels, mit dem die Kommunikationsverbindung aufgebaut werden soll, Berücksichtigung findet. Dies ist beispielsweise dann vorteilhaft, wenn eine Person sich zwar in Kommunikationsreichweite zum Schloss mit ihrem Schlüssel befindet, jedoch ein Zutritt oder Zugriff nicht erwünscht ist. Gerade bei Automatikbetrieb kann so vermieden werden, dass ein im Kommunikationsbereich angeordneter Schlüssel zu einer permanent wiederholten Freigabe des Schlosses 40 führt.

In der vorliegenden Ausgestaltung ist ferner vorgesehen, dass die Kommunikationsverbindung zwischen dem Schloss 40 und dem Schlüssel 42 nur während der Geschäftszeiten hergestellt werden kann. Außerhalb der Geschäftszeiten ist ein Zutritt mit dem Schlüssel 42 nicht möglich. Jedoch besteht die Möglichkeit, eine Freigabe über die Zentrale 68 anzufordern. In diesem Fall kann auch außerhalb der Geschäftszeiten ein Zutritt erfolgen.

Die Kommunikationsverbindung ist vorliegend eine Nahfunkverbindung im Bereich 1,2 GHz. In diesem Bereich stehen eine Vielzahl von Teilfrequenzen als Kanäle zur Verfügung. Eine Frequenz bildet einen Kanal. Als Modulationsart zur Signalübertragung wird vorliegend die PSK-Modulation verwendet. Als zusätzliche Codierungssicherheit ist vorgesehen, dass die Kommunikationsverbindung nicht nur einen Kanal, sondern vorliegend vier Kanäle umfasst. Es sind dies die Frequenzen 1,156 GHz, 1,168 GHz, 1,985 GHz und 2,036 GHz. Die Kommunikation erfolgt über alle vier Frequenzen, das heißt alle vier Kanäle gemäß einem vorgebbaren Übertragungsprotokoll. Ist ein Schlüssel nicht in der Lage, genau diese vier Kanäle protokollgemäß abzuarbeiten, fehlt ihm die Berechtigung für den Zutritt. Die Datenübertragung kann in Voll-Duplex in beide Richtungen gleichzeitig erfolgen.

In einer weiteren Ausgestaltung wird der Schlüssel 42 im Automatikbetrieb betrieben. In der Ausgangsstellung befindet sich das Schloss 40 in einem Energiesparmodus, das heißt in der vorliegenden Ausgestaltung sind ebenfalls wieder alle nicht erforderlichen Funktionsgruppen deaktiviert. Lediglich die Sende-Empfangseinheit 36 ist in regelmäßigen Zeitabständen aktiv. Sie sendet ein Initüerungssignal in Form ihres Identifikationscodes ID11 beziehungsweise ID12 aus. Unmittelbar nach Aussenden dieses Initiierungssignals wird der Empfangsteil der Sende-Empfangseinheit 36 für einen kurzen Zeitraum aktiviert, um zu prüfen, ob ein Schlüssel mit seinem Identifikationscode antwortet. Erfolgt keine Antwort, wird die Sende-Empfangseinheit 36 ebenfalls für einen vorgebbaren Zeitraum von vorliegend einer Sekunde deaktiviert, um Energie zu sparen.

Gelangt der Schlüssel 42, der sich nunmehr im Automatikbetrieb befindet und der ebenfalls im Energiesparmodus sich befindet, in den Kommunikationsbereich des Schlosses 40, so wird seine zumindest zeitweise aktive Empfangseinheit 54 das Initüerungssignal des Schlosses 40 empfangen und in den aktiven Zustand wechseln. Über die Sendeeinheit 54 wird dann der Identifikationscode ID21 an das Schloss 40 übermittelt, welches daraufhin ebenfalls in den aktiven Zustand übergeht und die Kommunikation zur Feststellung der Berechtigung aktiviert. Liegt die Berechtigung vor, so wird ohne weiteres die Freigabe erteilt und der Verriegelungsmechanismus 20 entsprechend angesteuert. Auch hier wird wieder ein Timer der Rechnereinheit 64 gestartet, der eine automatische Deaktivierung des Verriegelungsmechanismus 20 nach drei Sekunden vorsieht.

Im vorliegenden Fall wird neben dem Pegel des Empfangssignals vom Schloss 40 auch eine Pegeländerung ausgewertet. Bleibt die Person mit dem Schlüssel nach Zutritt im Kommunikationsbereich mit dem Schloss 40 auf der Gegenseite der Tür 12 stehen, so ermittelt die gegenüberliegende Sende-Empfangseinheit einen statischen Signalpegel bezüglich des Schlüssels 42. In der vorliegenden Ausgestaltung wird dies derart gewertet, dass eine erneute Freigabe für die Tür 12 nicht angefordert ist. Erst eine Bewegung auf das Schloss zu führt dazu, dass die Kommunikation mit dem Schlüssel als Anforderung auf eine Freigabe gewertet wird.

Erst wenn das Schloss 40 kein Empfangssignal eines Schlüssels mehr empfängt oder das Empfangssignal unterhalb eines vorgebbaren Referenzpegels liegt, wechselt es vom aktiven Zustand in den Energiesparmodus.

Befinden sich nun zwei oder mehrere Schlüssel in Kommunikationsreichweite zum Schloss 40, die jeweils im Automatikbetrieb betrieben werden, so empfängt das Schloss 40 von jedem der Schlüssel ein Empfangssignal. Diese werden im Sinne der Ausgestaltung zu Fig. 4 abgearbeitet und das Signal mit dem größten Pegel wird zur Herstellung einer Kommunikationsverbindung in der oben beschriebenen Weise ausgewählt. Bezüglich der Abwicklung wird auf die Ausführungen zu den vorhergehenden Figuren verwiesen.

Erweist es sich, dass der Schlüssel mit dem größten Signalpegel über keine Berechtigung für einen Zutritt verfügt, so wird mit dem Schlüssel mit dem zweitgrößten Empfangspegel eine Kommunikationsverbindung hergestellt, und wie zuvor beschrieben abgearbeitet.

Durch Auslegung der Kommunikationsreichweite kann die Anzahl der praktisch in Frage kommenden Schlüssel reduziert werden. Auf diese Weise kann eine zügige Abarbeitung der einzelnen Zugangsanforderungen erreicht werden.

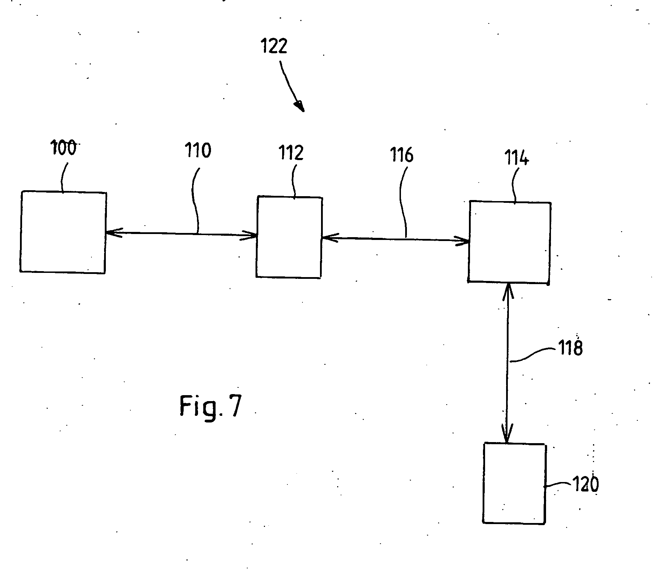

In Fig. 7 ist schematisch eine Schließanlage 122 dargestellt, die drei Schlösser 112, 114, 120 aufweist, die über Schloss-Schloss-Kommunikationsverbindungen 116, 118 miteinander in Kommunikationsverbindung stehen. Die Kommunikationsverbindungen sind vorliegend Funkverbindungen. Jedes Schloss weist eine eigene Identifikation auf, die innerhalb der Schließanlage 122 nur einmal vergeben ist und das jeweilige Schloss 112, 114, 120 identifiziert.

Wie aus Fig. 7 ferner ersichtlich ist, ist eine Einheit 100 zum Programmieren in Form eines tragbaren Rechners vorgesehen, der über eine Kommunikationsverbindung 110 mit dem Schloss 112 in Kommunikation steht. Vorliegend ist lediglich das Schloss 112 dazu geeignet, eine Kommunikationsverbindung mit der Einheit 100 herzustellen. Hierzu wird von der Einheit 100 ein Datenpaket mit einer Schlossidentifikation des Schlosses 112 ausgesendet, welches eine Berechtigung zum Herstellen der Kommunikationsverbindung 110 enthält. Das Schloss 112 wertet das Datenpaket aus und bei Vorliegen der Berechtigung wird ein entsprechendes Datenpaket an die Einheit 100 zurückgesendet, nachdem die Berechtigung positiv geprüft wurde. Auf diese Weise kann die Kommunikationsverbindung 110 zwischen der Einheit 100 und dem Schloss 112 hergestellt werden.

Die vorliegende Ausgestaltung sieht ferner vor, dass die Einehit 100 Abfragepakete aussendet, um so die Schloss-Netzwerkstruktur der Schlösser 112, 114, 120 sowie deren Kommunikationsverbindungen 116 und 118 zu ermitteln.

Darüber hinaus können die Schlösser 112, 114, 120 mittels der Einheit 100 programmiert werden. Dies soll im Folgenden anhand eines Beispiels zum Programmieren des Schlosses 120 näher erläutert werden.

Zunächst wird zwischen der Einheit 100 und dem Schloss 112 eine Kommunikationsverbindung 110 hergestellt. Die Schlösser 112, 114 und 120 stehen über Kommunikationsverbindungen 116, 118 drahtlos über Funk miteinander in Kommunikationsverbindung.

Nun wird über die Einheit 100 eine Berechtigung eingegeben, die über die Kommunikationsverbindung 110 an das Schloss 112 übermittelt wird. Dieses prüft die Berechtigung und gibt eine Programmiererlaubnis frei, sobald die Berechtigung erfolgreich geprüft wurde. Die Erlaubnis zum Programmieren wird über die Kommunikationsverbindung 110 an die Einheit 100 übermittelt. Die Kommunikationsverbindung 110 ist ebenfalls eine Funkverbindung. Zunächst fragt die Einheit 100 über die Kommunikationsverbindungen 110, 116 und 118 ab, welche der Schlösser über welche Kommunikationsverbindung miteinander in Kommunikationsverbindung stehen. Hierzu können in den Schlössern 112, 114, 120 Listen geführt sein, in denen die Schlösser aufgelistet sind, von denen ausgesendete Datenpakete empfangen werden können.

Nachdem die Einheit 100 die Netzstruktur der Schließanlage 122 aufgenommen hat, können gezielt Datenpakete zum Programmieren der einzelnen Schlösser 112, 114, 120 ausgesendet werden.

Zur Kommunikation, insbesondere zum Programmieren des Schlosses 120 sendet die Einheit 100 ein Datenpaket mit der Identifikation des Schlosses 120 aus. Über die Kommunikationsverbindung 110 empfängt das Schloss 112 das Datenpaket und prüft dessen Identifikation. Es stellt fest, dass die Identifikation nicht der eigenen Identifikation entspricht und sendet das Datenpaket erneut über die Kommunikationsverbindung 116 aus. Nunmehr empfängt das Schloss 114 über die Kommunikationsverbindung 116 das Datenpaket und prüft ebenfalls dessen Identifikation. Auch hier wird eine Abweichung festgestellt, so dass das Schloss 114 das empfangene Datenpaket nochmals über die Kommunikationsverbindung 118 aussendet. Das Datenpaket wird über die Kommunikationsverbindung 118 vom Schloss 120 empfangen. Das Schloss 120 prüft die Identifikation des Datenpakets und stellt fest, dass es mit der eigenen Identifikation übereinstimmt. Das Datenpaket wird nunmehr aufgenommen und seine Befehle mittels einer nicht näher dargestellten Rechnereinheit umgesetzt und gegebenenfalls gespeichert.

Ferner hat das Schloss 120 Betriebszustände bezüglich der Batterie und der Berechtigungsanforderungen gespeichert. Diese werden nun in einem weiteren Datenpaket zusammengestellt und mit einer Identifikation der Einheit 100 versehen. Das Schloss 120 sendet dieses Datenpaket über die Kommunikationsverbindung 118 an das Schloss 114. Das Schloss 114 seinerseits leitet dieses Datenpaket gegebenenfalls nach Prüfung der Identifikation über die Kommunikationsverbindung 116 an das Schloss 112 weiter. Auch hier kann die Identifikation wieder geprüft werden und bei Ungleichheit der Identifikation von Schloss und Datenpaket wird das Datenpaket erneut über die Kommunikationsverbindung 110 an die Einheit 100 weitergeleitet. Dort wird das Datenpaket empfangen und die Daten entsprechend ausgewertet.

Um zu vermeiden, dass das vom Schloss 114 an das Schloss 120 weiterzuleitende Datenpaket vom Schloss 112 ebenfalls empfangen und nochmals ausgesendet wird, verfügen die Schlösser 112, 114, 120 über einen Kurzzeitspeicher, in dem das Aussenden eines Datenpakets mit seiner Identifikation für einen vorgebbaren Zeitraum von ca. 1 Sekunde verhindert wird. Empfängt das Schloss 112 das bereits an das Schloss 114 ausgesandte Datenpaket des Rechners 100, so wird geprüft, ob dieses Datenpaket bereits ausgesandt wurde. Ist das der Fall, wird ein weiteres Aussenden nicht durchgeführt. Auf diese Weise kann verhindert werden, dass Datenpakete im Kommunikationssystem der Schließanlage 122 zirkulieren und die Kommunikationsverbindungen 110, 116, 118 unnötig belegen.

Die vorhergehend beschriebenen Ausführungsbeispiele dienen lediglich der Erläuterung der Erfindung und sind für diese nicht beschränkend. So können in dualer Weise die Funktionen vom Schloss auch im Schlüssel und umgekehrt vorgesehen sein, ohne den Schutzbereich der Erfindung zu verlassen. So lässt sich die vorliegende Erfindung auch mit mechanischen Schlüsseln und Schlössern kombinieren. Darüber hinaus kann beispielsweise vorgesehen sein, dass die Klinke zweiteilig ausgeführt ist, die unabhängig voneinander bewegbar sind, wobei für jeden Klinkenteil eine separate einzeln steuerbare Kopplungseinheit vorgesehen ist. Zusammen mit richtungsselektiven Antennen kann eine unabhängige, selektive Steuerung für jede Türseite erreicht werden. So können auch weitere Kombinationen, Ausgestaltungen und Abwandlungen vom Fachmann im Rahmen dieser Erfindung verwirklicht werden.

**Bezugszeichenliste:**

| | |
|---|---|
| 10 Türzarge | 58 Klassifizierer |
| 12 Tür | 60 Entscheider |
| 14 Türklinke | 62 Speicher |
| 16 Aussparung | 64 Rechnereinheit |
| 18 Falle | 66 GSM-Modul |
| 20 Verriegelungsmechanismus | 68 Zentrale |
| 22 Sensor | 70 Informationssignal |
| 24 Richtfunkantenne | 72 Schlossidentifikationssignal |
| 26 Batterie | 74 Schlüsselidentifikationssignal |
| 28 Batteriefachdeckel | 76 Datenbereich |
| 30 Batteriefach | 78 Redundanz |
| 32 Leuchtdiode | 80 Gehäuse |
| 34 Steuereinheit | 82 Batterie |
| 36 Sende-Empfangseinheit | 84 Antenneneinheit |
| 38 Linie | 100 Einheit |
| 40 Schloss | 110 Kommunikationsverbindung |
| 42 Schlüssel | 112 Schloss |
| 44 Umschalttaste | 114 Schloss |
| 46 Öffnungstaste | 116 Kommunikationsverbindung |
| 48 Anzeigeeinheit | 118 Kommunikationsverbindung |
| 50 Steuereinheit | 120 Schloss |
| 52 Sendeeinheit | 122 Schließanlage |
| 54 Empfangseinheit | |
| 56 Empfangseinheit | |

## Patentansprüche

1. Verfahren zum Betrieb eines Systems mit wenigstens einem elektronischen Schloss und wenigstens einem elektronischen Schlüssel, wobei ein Verriegelungsmechanismus des Schlosses mittels einer Steuereinheit des Schlosses gesteuert wird, mit folgenden Schritten:
- Herstellen einer drahtlosen Kommunikationsverbindung zwischen der Steuereinheit und dem elektronischen Schlüssel mittels Sende- und Empfangsmitteln,
- Aussenden eines Aufforderungssignals entweder vom Schloss zum Schlüssel oder vom Schlüssel zum Schloss,
- empfangsseitiges Nutzen eines Parameters aus dem Aufforderungssignal zur Ermittlung einer Verzögerung eines Aussendens eines Antwortsignals, zu welchem Zweck die Verzögerung des Aussendens des Antwortsignals aus einem Empfangssignalpegel, einer Empfangssignalpegeländerung und/oder einer Empfangsgüte des Aufforderungssignals ermittelt wird.
- Diskretisieren der ermittelten Verzögerung, so dass feste Zeitfenster für das Aussenden des Antwortsignals realisiert werden können, die derart gewählt sind, dass sich mehrere Antwortsignale zeitlich nicht überlappen, zu welchem Zweck die Antwortsignale eine vorgebbare zeitliche Länge aufweisen und die diskreten Verzögerungszeiten bezüglich ihrer Zeitfenster an das entsprechende Antwortsignal angepasst sind,
- wobei die Verzögerung des Aussendens des Antwortsignals so zugeordnet wird, dass im Bereich großer Empfangsfeldstärken bezlehungsweise Empfangsfeldstärkeänderungen eine sehr große Auflösung mit vielen diskreten Verzögerungswerten vorgesehen ist, wohingegen bei kleinen Empfangsfeldstärken beziehungsweise Empfangsfeldstärkeänderungen nur eine geringe Anzahl von diskreten Verzögerungswerten vorgesehen ist, und
- Aussenden des Antwortsignals gemäß der ermittelten, diskretisierten Verzögerung.

2. Verfahren nach Anspruch 1, **dadurch gekennzeichnet, dass** das Vorliegen einer Zugangs- und/oder Zugriffsberechtigung ermittelt und abhängig vom Vorliegen der Zugangs- und/oder Zugriffsberechtigung der Zugang und/oder der Zugriff freigegeben oder verwehrt wird.

3. Verfahren nach Anspruch 1 oder 2, **dadurch gekennzeichnet, dass** das Vorliegen einer Zugangs- und/oder Zugriffsberechtigung für eine Schlüssel-Schlosskombination primär für den Kommunikationspartner und/oder das Schloß mit der kürzesten Verzögerung ermittelt wird.

4. Verfahren nach einem der Ansprüche 1 bis 3, **dadurch gekennzeichnet, dass** eine wertediskrete Verzögerung des Aussendens des Antwortsignals verwendet wird.

5. Verfahren nach Anspruch 1 bis 4, **dadurch gekennzeichnet, dass** die Empfangssignalpegel und/oder Empfangssignalpegeländerungen ermittelt werden.

6. Verfahren nach einem der Ansprüche 1 bis 5, **dadurch gekennzeichnet, dass** das Empfangssignal mit dem stärksten Pegel und/oder Pegeländerung selektiert wird.

7. Verfahren nach einem der Ansprüche 1 bis 6, **dadurch gekennzeichnet, dass** schloss- und/oder schlüsselseitig ein Identifikationssignal ausgesendet wird.

8. Verfahren nach einem der Ansprüche 1 bis 7, **dadurch gekennzeichnet, dass** eine verschlüsselte Zugangs- und/oder Zugriffsberechtigung verwendet wird.

9. Verfahren nach einem der Ansprüche 1 bis 8, **dadurch gekennzeichnet, dass** die Kommunikationsverbindung nur in einem vorgebbaren Zeitraum hergestellt wird.

10. Verfahren nach einem der Ansprüche 1 bis 9, **dadurch gekennzeichnet, dass** eine mehrkanalige Kommunikationsverbindung verwendet wird.

11. Verfahren nach einem der Ansprüche 1 bis 10, **dadurch gekennzeichnet, dass** als Kommunikationsverbindung eine Nahfunkverbindung verwendet wird.

12. Verfahren nach Anspruch 11, **dadurch gekennzeichnet, dass** die Nahfunkverbindung als Modulationsart eine FSK- und/oder PSK-Modulation verwendet.

13. Verfahren nach einem der Ansprüche 1 bis 12, **dadurch gekennzeichnet, dass** die Kommunikationsverbindung gerichtet ist.

14. Verfahren nach einem der Ansprüche 1 bis 13, **dadurch gekennzeichnet, dass** der Kommunikationspartner und/oder das Schloss bis zum Aufwecken einen Energiesparmodus einnehmen.

15. Verfahren nach einem der Ansprüche 1 bis 14 **dadurch gekennzeichnet, dass** das Sendemittel in vorgebbaren Zeitabständen ein Initiierungssignal aussendet.

16. Verfahren nach einem der Ansprüche 1 bis 15, **dadurch gekennzeichnet, dass** das Empfangsmittel nur in vorgebbaren Zeitabständen empfangsbereit ist.

17. Verfahren nach einem der Ansprüche 1 bis 16, **dadurch gekennzeichnet, dass** eine Energieversorgung über die Kommunikationsverbindung erfolgt.

18. Verfahren nach einem der Ansprüche 1 bis 17, **dadurch gekennzeichnet, dass** die ermittelten Daten gespeichert werden.

19. Verfahren nach einem der Ansprüche 1 bis 18, **dadurch gekennzeichnet, dass** die ermittelten Daten an eine Zentrale übermittelt werden.

20. Verfahren nach einem der Ansprüche 1 bis 19, **dadurch gekennzeichnet, dass** die Freigabe durch die Zentrale erfolgt.

21. Verfahren nach einem der Ansprüche 1 bis 20, **dadurch gekennzeichnet, dass** Empfangssignale von anderen Schlössern erkannt und ausgeblendet werden.

22. Verfahren nach einem der Ansprüche 1 bis 21, **dadurch gekennzeichnet, dass** das Schloss und/oder der Kommunikationspartner durch ein Empfangssignal eines Schlüssels und/oder eines Schlosses aus einem Energiesparmodus aktiviert wird.

23. Verfahren nach einem der Ansprüche 1 bis 22, **dadurch gekennzeichnet, dass** für eine Aktivierung aus einem Energiesparmodus das Überschreiten eines vorgebbaren Referenzpegels durch den Empfangspegel verwendet wird.

24. Verfahren nach einem der Ansprüche 1 bis 23, **dadurch gekennzeichnet, dass** beim Aktivieren des Schlosses aus einem Energiesparmodus heraus die Kommunikationsverbindung zu dem Kommunikationspartner mit dem stärksten Signalpegel hergestellt wird.

25. Verfahren nach einem der Ansprüche 1 bis 24, **dadurch gekennzeichnet, dass** der Kommunikationspartner oder das Schloss manuell aktiviert wird.

26. Verfahren nach einem der Ansprüche 1 bis 25, **dadurch gekennzeichnet, dass** eine Kommunikationsverbindung zwischen wenigstens zwei Schlüsseln, insbesondere zwischen einem Masterschlüssel und einem Schlüssel hergestellt wird.

27. Schloss für ein Zugangsberechtigungssystem mit:
- einem mittels einer Steuereinheit steuerbaren Verriegelungsmechanismus,
- Sende-Empfangsmitteln zum Empfang eines Aufforderungssignals und zum Senden eines Antwortsignals und
- einer Signalpegelerfassungseinheit,
**dadurch gekennzeichnet, dass**
- die Signalpegelerfassungseinheit einen Parameter aus dem Aufforderungssignal empfangsseitig zur Ermittlung einer Verzögerung eines Aussendens des Antwortsignals nutzt, welche Verzögerung des Aussendens des Antwortsignals so zugeordnet ist, dass im Bereich großer Empfangsfeldstärken beziehungsweise Empfangsfeldstärkeänderungen eine sehr große Auflösung mit vielen diskreten Verzögerungswerten vorgesehen ist, wohingegen bei kleinen Empfangsfeldstärken beziehungsweise Empfangsfeldstärkeänderungen nur eine geringe Anzahl von diskreten Verzögerungswerten vorgesehen ist,
- die Verzögerung des Aussendens des Antwortsignals durch einen Empfangssignalpegel, eine Empfangssignalpegeländerung und/oder eine Empfangsgüte des Aufforderungssignals bestimmt ist,
- die Signalpegelerfassurigseinheit eine Diskretisierungseinheit aufweist und die ermittelte Verzögerung diskretisiert ist, so dass feste Zeitfenster für das Aussenden des Antwortsignals realisiert werden können, die derart gewählt sind, dass sich mehrere Antwortsignale zeitlich nicht überlappen, zu welchem Zweck die Antwortsignale eine vorgebbare zeitliche Länge aufweisen und die diskreten Verzögerungszeiten bezüglich ihrer Zeitfenster an das entsprechende Antwortsignal angepasst sind.

28. Schloss nach Anspruch 27, **gekennzeichnet durch** wenigstens zwei Richtantenneneinheiten, deren Wirkbereiche sich im wesentlichen in voneinander verschiedene Raumbereiche erstrecken.

29. Schloss nach Anspruch 28, **dadurch gekennzeichnet, dass** für jede der Antenneneinheiten ein eigenes Identifikationssignal verwendet wird.

30. Schlüssel für ein Zugangsberechtigungssystem mit:
- Sende-Empfangsmitteln zum Empfang eines Aufforderungssignals und zum Senden eines Antwortsignals, wobei mit den Sende-Empfangsmitteln eine Kommunikationsverbindung zu einem Schloss herstellbar ist,
- einer Signalpegelerfassungseinheit,
- wobei die Signalpegelerfassungseinheit einen Parameter aus dem Aufforderungssignal empfangsseitig zur Ermittlung einer Verzögerung eines Aussendens des Antwortsignals nutzt,
- wobei die Verzögerung des Aussendens des Antwortsignals durch einen Empfangssignalpegel, eine Empfangssignalpegeländerung und/oder eine Empfangsgüte des Aufforderungssignals bestimmt ist,
**dadurch gekennzeichnet, dass**
- die Verzögerung des Aussendens des Antwortsignals so zugeordnet ist, dass im Bereich großer Empfangsfeldstärken beziehungsweise Empfangsfeldstärkeänderungen eine sehr große Auflösung mit vielen diskreten Verzögerungswerten vorgesehen ist, wohingegen bei kleinen Empfangsfeldstärken beziehungsweise Empfangsfeldstärkeänderungen nur eine geringe Anzahl von diskreten Verzögerungswerten vorgesehen ist,
- die Signalpegelerfassungseinheit eine Diskretisierungseinheit aufweist und die ermittelte Verzögerung diskretisiert ist, so dass feste Zeitfenster für das Aussenden des Antwortsignals realisiert werden können, die derart gewählt sind, dass sich mehrere Antwortsignale zeitlich nicht überlappen, zu welchem Zweck die Antwortsignale eine vorgebbare zeitliche Länge aufweisen und die diskreten Verzögerungszeiten bezüglich ihrer Zeitfenster an das entsprechende Antwortsignal angepasst sind.

31. Schlüssel nach Anspruch 30, **gekennzeichnet durch** eine Energieversorgungseinheit

32. Schlüssel nach Anspruch 31, **dadurch gekennzeichnet, dass** mittels der Energieversorgungseinheit Empfangsenergie zur Energieversorgung des Schlüssels bereitgestellt wird.

33. Schlüssel nach einem der Ansprüche 30 bis 32. **gekennzeichnet durch** eine Antenneneinheit mit im wesentlichen einer Kugelcharakteristik.

34. Schlüssel nach einem der Ansprüche 30 bis 33, **gekennzeichnet durch** eine Schnittstelle.

## Claims

1. A method for operating a system comprising at least one electronic lock and at least one electronic key, wherein a locking mechanism of the lock is controlled by means of a control unit of the lock, comprising the following steps:
- establishing a wireless communication connection between the control unit and the electronic key by means of transmitting and receiving means,
- sending out a first request signal either from the lock to the key or from the key to the lock,
- use of a parameter included in the request signal on the reception side for determining a time delay of the sending of a reply signal, for which purpose the time delay of the sending of the reply signal is determined on the base of a reception signal level, a reception signal level change and/or a reception quality of the request signal,
- discretizing the determined delay, such that defined time slots can be realized for the sending of the reply signal which are chosen such that several reply signals will not overlap in time, for which purpose the reply signals comprise a pre-determinable time length and the discrete delay times are adapted to the corresponding reply signal with respect to their time slots,
- wherein the delay of the sending of the reply signal is allocated such that a very high resolution comprising many discrete delay values is provided in the range of great reception field strengths respectively reception field strength changes, whereas only a small number of discrete delay values is provided for small reception field strengths respectively reception field strength changes,and
- sending out the reply signal according to the determined discretized time delay.

2. A method according to claim 1, **characterized in that** it is determined whether an access authorization and/or permission exists and dependent on the existence of the access authorization and/or permission, the access will be allowed or refused.

3. A method according to claim 1 or 2, **characterized in that** the existence of an access authorization and/or permission for a key and lock combination will be primarily determined for the communication partner and/or the lock having the shortest delay.

4. A method according to one of the claims 1 through 3, **characterized in that** a value discrete delay of the sending of the reply signal will be used.

5. A method according to claims 1 through 4, **characterized in that** the reception signal level and/or reception signal level changes will be determined.

6. A method according to one of the claims 1 through 5, **characterized in that** the reception signal having the strongest level and/or level change will be selected.

7. A method according to one of the claims 1 through 6, **characterized in that** an identification signal will be sent out by the lock and/or the key.

8. A method according to one of the claims 1 through 7, **characterized in that** an encoded access authorization and/or permission will be used.

9. A method according to one of the claims 1 through 8, **characterized in that** the communication connection will be only established within a pre-determinable period of time.

10. A method according to one of the claims 1 through 9, **characterized in that** a multi-channel communication connection will be used.

11. A method according to one of the claims 1 through 10, **characterized in that** a short-range radio connection will be used as communication connection.

12. A method according to claim 11, **characterized in that** the modulation type the short-range radio connection uses is a FSK and/or PSK modulation.

13. A method according to one of the claims 1 through 12, **characterized in that** the communication connection is directed.

14. A method according to one of the claims 1 through 13, **characterized in that** the communication partner and/or the lock will remain in an energy-saving mode until being woken up.

15. A method according to one of the claims 1 through 14, **characterized in that** the transmitting means sends out an initiation signal within pre-determinable time intervals.

16. A method according to one of the claims 1 through 15, **characterized in that** the receiving means is only ready-to-receive within pre-determinable time intervals.

17. A method according to one of the claims 1 through 16, **characterized in that** an energy supply is realized via the communication connection.

18. A method according to one of the claims 1 through 17, **characterized in that** the determined data will be memorized.

19. A method according to one of the claims 1 through 18, **characterized in that** the determined data will be transmitted to a central unit.

20. A method according to one of the claims 1 through 19, **characterized in that** the authorization is given by the central unit.

21. A method according to one of the claims 1 through 20, **characterized in that** reception signals from other locks are recognized and masked out.

22. A method according to one of the claims 1 through 21, **characterized in that** the lock and/or the communication partner is activated out of an energy-saving mode by means of a reception signal of a key and/or a lock.

23. A method according to one of the claims 1 through 22, **characterized in that** if the reception level exceeds a pre-determinable reference level, this fact will be used for the activation out of an energy-saving mode.

24. A method according to one of the claims 1 through 23, **characterized in that** if the lock is activated out of an energy-saving mode, the communication connection will be established to the communication partner having the highest signal level.

25. A method according to one of the claims 1 through 24, **characterized in that** the communication partner or the lock will be manually activated.

26. A method according to one of the claims 1 through 25, **characterized in that** a communication connection will be established between at least two keys, especially between a master key and a key.

27. A lock for an access authorization system, comprising:
- a locking mechanism that can be controlled by means of a control unit,
- transmitting and receiving means for receiving a request signal and for sending a reply signal and
- a signal level detection unit,
**characterized in that**
- the signal level detection unit uses a parameter included in the request signal on the reception side for determining a time delay of the sending of a reply signal, which time delay of the sending of the reply signal is allocated such that a very high resolution comprising many discrete delay values is provided in the range of great reception field strengths respectively reception field strength changes, whereas only a small number of discrete delay values is provided for small reception field strengths respectively reception field strength changes,
- the time delay of the sending of the reply signal is determined by a reception signal level, a reception signal level change and/or a reception quality of the request signal,
- the signal level detection unit comprises a discretization unit and the determined delay is discretized such that defined time slots can be realized for the sending of the reply signal which are chosen such that several reply signals will not overlap in time, for which purpose the reply signals comprise a pre-determinable time length and the discrete delay times are adapted to the corresponding reply signal with respect to their time slots.

28. A lock according to claim 27, **characterized by** at least two directional antenna units, the effective ranges of which essentially extend into space regions that are different from each other.

29. A lock according to claim 28, **characterized in that** a particular identification signal will be used for each one of the antenna units.

30. A key for an access authorization system, comprising
- transmitting and receiving means for receiving a request signal and for sending a reply signal, wherein a communication connection to a lock can be established by means of the transmitting and receiving means,
- a signal level detection unit,
- wherein the signal level detection unit uses a parameter included in the request signal on the reception side for determining a time delay of the sending of the reply signal,
- wherein the time delay of the sending of the reply signal is determined by a reception signal level, a reception signal level change and/or a reception quality of the request signal,
**characterized in that**
- the time delay of the sending of the reply signal is allocated such that a very high resolution comprising many discrete delay values is provided in the range of great reception field strengths respectively reception field strength changes, whereas only a small number of discrete delay values is provided for small reception field strengths respectively reception field strength changes,
- the signal level detection unit comprises a discretization unit and the determined delay is discretized such that defined time slots can be realized for the sending of the reply signal which are chosen such that several reply signals will not overlap in time, for which purpose the reply signals comprise a pre-determinable time length and the discrete delay times are adapted to the corresponding reply signal with respect to their time slots.

31. A key according to claim 30, **characterized by** an energy supply unit.

32. A key according to claim 31, **characterized in that** reception energy is provided by means of the energy supply unit for supplying the key with energy.

33. A key according to one of the claims 30 through 32, **characterized by** an antenna unit having an essentially omnidirectional characteristic.

34. A key according to one of the claims 30 through 33, **characterized by** an interface.

## Revendications

1. Procédé d'opération d'un système comprenant au moins une serrure électronique et au moins une clé électronique, un mécanisme de verrouillage de la serrure étant commandé par moyen d'une unité de commande de la serrure, comprenant les étapes suivantes :
- établir une liaison de communication sans fil entre l'unité de commande et la clé électronique par l'intermédiaire des moyens d'émission et de réception,
- émettre un signal d'appel soit à partir de la serrure à la clé soit à partir de la clé à la serrure,
- utiliser un paramètre contenu dans le signal d'appel du côté de réception pour déterminer un délai d'une émission d'un signal de réponse, et à cette fin le délai de l'émission du signal de réponse sera déterminé à partir d'un niveau de signal de réception, d'un changement de niveau de signal de réception et/ou d'une qualité de réception du signal d'appel,
- discrétiser le délai déterminé de sorte qu'on peut réaliser des fenêtres temporelles définies pour l'émission du signal de réponse, lesquelles sont choisies de façon que plusieurs signaux de réponse ne chevauchent pas temporellement, à quelle fin les signaux de réponse comprennent une longueur temporelle pré-déterminable et les périodes de délai discrètes sont adaptées au signal de réponse correspondant par rapport à leur fenêtres temporelles,
- dans lequel le délai de l'émission du signal de réponse est attribué de façon qu'une très grande résolution comprenant un grand nombre de valeurs de délai discrètes soit prévue au niveau de grandes intensités de champ de réception ou de grands changements d'intensité de champ de réception, tandis qu'un nombre faible de valeurs de délai discrètes soit prévue au niveau des intensités de champ de réception faibles ou des changements d'intensité de champ de réception faibles, et
- émettre le signal de réponse selon le délai discrétisé et déterminé.

2. Procédé selon la revendication 1, **caractérisé en ce qu'**il est déterminé si une autorisation et/ou permission d'accès existe et, en fonction de l'existence de l'autorisation et/ou de la permission d'accès, l'accès sera autorisé ou refusé.

3. Procédé selon la revendication 1 ou la revendication 2, **caractérisé en ce que** l'existence d'une autorisation et/ou d'une permission d'accès à une combinaison de clé et de serrure est en premier lieu déterminée pour le partenaire de communication et/ou la serrure comprenant le plus court délai.

4. Procédé selon l'une des revendications 1 à 3, **caractérisé en ce qu'**un délai aux valeurs discrètes de l'émission du signal de réponse est utilisé.

5. Procédé selon les revendications 1 à 4, **caractérisé en ce que** les niveaux des signaux de réception et/ou les changements de niveaux des signaux de réception sont déterminés.

6. Procédé selon l'une des revendications 1 à 5, **caractérisé en ce que** le signal de réception comprenant le niveau le plus fort et/ou le changement de niveau le plus fort est sélectionné.

7. Procédé selon l'une des revendications 1 à 6, **caractérisé en ce qu'**un signal d'identification est émis par la serrure et/ou par la clé.

8. Procédé selon l'une des revendications 1 à 7, **caractérisé en ce qu'**une autorisation et/ou permission d'accès encodée est utilisée.

9. Procédé selon l'une des revendications 1 à 8, **caractérisé en ce que** la liaison de communication n'est établie que pendant une période pré-déterminable.

10. Procédé selon l'une des revendications 1 à 9, **caractérisé en ce qu'**une liaison de communication à plusieurs voies est utilisée.

11. Procédé selon l'une des revendications 1 à 10, **caractérisé en ce qu'**une liaison radio à courte distance est utilisée en tant que liaison de communication.

12. Procédé selon la revendication 11, **caractérisé en ce que** le type de modulation utilisé par la liaison radio à courte distance est une modulation FSK et/ou PSK.

13. Procédé selon l'une des revendications 1 à 12, **caractérisé en ce que** la liaison de communication est une liaison dirigée.

14. Procédé selon l'une des revendications 1 à 13, **caractérisé en ce que** le partenaire de communication et/ou la serrure restent dans un mode d'économie d'énergie jusqu'au réveil.

15. Procédé selon l'une es revendications 1 à 14, **caractérisé en ce que** le moyen d'émission émet un signal d'initiation à intervalles pré-déterminables.

16. Procédé selon l'une des revendications 1 à 15, **caractérisé en ce que** le moyen de réception n'est disposé à réception qu'à intervalles pré-déterminables.

17. Procédé selon l'une des revendications 1 à 16, **caractérisé en ce qu'**une alimentation en énergie se fait via la liaison de communication.

18. Procédé selon l'une des revendications 1 à 17, **caractérisé en ce que** les données déterminées sont mémorisées.

19. Procédé selon l'une des revendications 1 à 18, **caractérisé en ce que** les données déterminées sont transmises à une unité centrale.

20. Procédé selon l'une des revendications 1 à 19, **caractérisé en ce que** c'est l'unité centrale qui donne l'autorisation.

21. Procédé selon l'une des revendications 1 à 20, **caractérisé en ce que** des signaux de réception venant d'autres serrures sont reconnus et supprimés.

22. Procédé selon l'une des revendications 1 à 21, **caractérisé en ce que** la serrure et/ou le partenaire de communication est activé à partir d'un mode d'économie d'énergie par moyen d'un signal de réception d'une clé et/ou d'une serrure.

23. Procédé selon l'une des revendications 1 à 22, **caractérisé en ce que** si le niveau de réception dépasse un niveau de référence pré-déterminable, ceci est utilisé pour une activation à partir du mode d'économie d'énergie.

24. Procédé selon l'une des revendications 1 à 23, **caractérisé en ce que** si la serrure est activée à partir d'un mode d'économie d'énergie, la liaison de communication sera établie au partenaire de communication comprenant le niveau de signal le plus élevé.

25. Procédé selon l'une des revendications 1 à 24, **caractérisé en ce que** le partenaire de communication ou la serrure est activé manuellement.

26. Procédé selon l'une des revendications 1 à 25, **caractérisé en ce qu'**une liaison de communication est établie entre au moins deux clés, notamment entre une clé maître et une clé.

27. Serrure destinée à un système d'autorisation d'accès, comprenant :
- un mécanisme de verrouillage susceptible d'être commandé par une unité de commande,
- des moyens d'émission et de réception pour recevoir un signal d'appel et pour émettre un signal de réponse et
- une unité de détection de niveaux de signal.
**caractérisé en ce que**
- l'unité de détection de niveaux de signal utilise un paramètre contenu dans le signal d'appel du côté de réception pour déterminer un délai d'une émission d'un signal de réponse, lequel délai de l'émission du signal de réponse est attribué de façon qu'une très grande résolution comprenant un grand nombre de valeurs de délai discrètes soit prévue au niveau de grandes intensités de champ de réception ou de grands changements d'intensité de champ de réception, tandis qu'un nombre faible de valeurs de délai discrètes soit prévue au niveau des intensités de champ de réception faibles ou des changements d'intensité de champ de réception faibles,
- le délai de l'émission du signal de réponse est déterminé par un niveau de signal de réception, un changement de niveau de signal de réception et/ou une qualité de réception du signal d'appel,
- l'unité de détection de niveaux de signal comprend une unité de discrétisation et le délai déterminé est discrétisé, de sorte que des fenêtres temporelles définies peuvent être réalisées pour l'émission du signal de réponse, lesquelles sont choisies de façon que plusieurs signaux de réponse ne chevauchent pas temporellement, à quelle fin les signaux de réponse comprennent une longueur temporelle pré-déterminable et les périodes de délai discrètes sont adaptées au signal de réponse correspondant par rapport à leur fenêtres temporelles.

28. Serrure selon la revendication 27, **caractérisé par** au moins deux unités d'antenne directive, dont les zones de fonctionnement s'étendent dans des zones d'espaces qui sont essentiellement différentes l'une de l'autre.

29. Serrure selon la revendication 28, **caractérisé en ce qu'**on utilise un signal d'identification particulier pour chacune des unités d'antenne.

30. Clé destinée à un système d'autorisation d'accès, comprenant :
- des moyens d'émission et de réception pour recevoir un signal d'appel et pour émettre un signal de réponse, les moyens d'émission et de réception pouvant établir une liaison de communication à une serrure,
- une unité de détection de niveaux de signal,
- dans lequel l'unité de détection de niveaux de signal utilise un paramètre contenu dans le signal d'appel du côté de réception pour déterminer un délai d'une émission d'un signal de réponse,
- dans lequel le délai de l'émission du signal de réponse est déterminé par un niveau de signal de réception, un changement de niveau de signal de réception et/ou une qualité de réception du signal d'appel,
**caractérisée en ce que**
- le délai de l'émission du signal de réponse est attribué de façon qu'une très grande résolution comprenant un grand nombre de valeurs de délai discrètes soit prévue au niveau de grandes intensités de champ de réception ou de grands changements d'intensité de champ de réception, tandis qu'un nombre faible de valeurs de délai discrètes soit prévue au niveau des intensités de champ de réception faibles ou des changements d'intensité de champ de réception faibles,
- l'unité de détection de niveaux de signal comprend une unité de discrétisation et le délai déterminé est discrétisé, de sorte que des fenêtres temporelles définies peuvent être réalisées pour l'émission du signal de réponse, lesquelles sont choisies de façon que plusieurs signaux de réponse ne chevauchent pas temporellement, à quelle fin les signaux de réponse comprennent une longueur temporelle pré-déterminable et les périodes de délai discrètes sont adaptées au signal de réponse correspondant par rapport à leur fenêtres temporelles.

31. Clé selon la revendication 30, **caractérisée par** une unité d'alimentation en énergie.

32. Clé selon la revendication 31, **caractérisée en ce que** de l'énergie de réception est fournie par moyen de l'unité d'alimentation en énergie pour alimenter la clé en énergie.

33. Clé selon l'une des revendications 30 à 32, **caractérisée par** une unité d'antennes comprenant une caractéristique essentiellement omnidirectionnelle.

34. Clé selon l'une des revendications 30 à 33, **caractérisée par** une interface.
